# EUROPEAN PATENT SPECIFICATION

(11) **EP 2 639 870 B1**
(45) Date of publication and mention of the grant of the patent: **02.03.2016**
(21) Application number: 11849599.3
(22) Date of filing: 08.12.2011
(51) Int. Cl.: H01M 8/04, F23J 11/02, F23N 5/24, H01M 8/24

(54) **ELECTRICITY-GENERATION SYSTEM AND METHOD FOR OPERATING SAME**
STROMERZEUGUNGSSYSTEM UND BETRIEBSVERFAHREN DAFÜR
SYSTÈME DE GÉNÉRATION D'ÉLECTRICITÉ ET SON PROCÉDÉ DE FONCTIONNEMENT

(30) Priority: 13.12.2010 JP 2010276955
(43) Date of publication of application: 18.09.2013
(73) Proprietor: Panasonic Intellectual Property Management Co., Ltd., Osaka 540-6207 (JP)
(72) Inventor: MORITA, Junji, Osaka 540-6207 (JP); TATSUI, Hiroshi, Osaka 540-6207 (JP); YASUDA, Shigeki, Osaka 540-6207 (JP); YUKIMASA, Akinori, Osaka 540-6207 (JP); INOUE, Atsutaka, Osaka 540-6207 (JP)
(74) Representative: Grünecker Patent- und Rechtsanwälte PartG mbB
(86) International application number: PCT/JP2011/006869
(87) International publication number: WO 2012/081207

(56) References cited:
- EP-A2- 1 835 240
- DE-A1- 10 000 405
- JP-A- 6 152 171
- JP-A- 2002 184 435
- JP-A- 2002 349 844
- JP-A- 2003 262 333
- JP-A- 2004 342 596
- JP-A- 2005 063 697
- JP-A- 2006 164 685
- JP-A- 2006 164 685
- JP-A- 2007 095 542
- JP-A- 2008 163 795
- JP-A- 2008 210 631
- JP-A- 2008 210 631
- JP-A- 2008 262 849
- JP-A- 2009 021 047
- JP-A- 2010 272 310

## Description

### Technical Field

The present invention relates to a power generation system configured to supply heat and electricity and a method of operating the power generation system, and particularly to the configuration of the power generation system.

### Background Art

A cogeneration system supplies generated electric power to users for electric power loads and recovers and stores exhaust heat for hot water supply loads of the users, the exhaust heat being generated by the electric power generation. Known as this type of cogeneration system is a cogeneration system configured such that a fuel cell and a water heater operate by the same fuel (see PTL 1, for example). A cogeneration system disclosed in PTL 1 includes: a fuel cell; a heat exchanger configured to recover heat generated by the operation of the fuel cell; a hot water tank configured to store water having flowed through the heat exchanger to be heated; and a water heater configured to heat the water flowing out from the hot water tank up to a predetermined temperature, and is configured such that the fuel cell and the water heater operate by the same fuel.

Moreover, a fuel cell power generation apparatus provided inside a building is known, which is configured for the purpose of improving an exhaust performance of the fuel cell power generation apparatus (see PTL 2, for example). A power generation apparatus disclosed in PTL 2 is a fuel cell power generation apparatus provided and used in a building including an intake port and includes an air introducing port through which air in the building is introduced to the inside of the fuel cell power generation apparatus, an air discharging pipe through which the air in the fuel cell power generation apparatus is discharged to the outside of the building, and a ventilation unit. The ventilation unit introduces the air from the outside of the building through the intake port to the inside of the building, further introduces the air through the air introducing port to the inside of the fuel cell power generation apparatus, and discharges the air through the air discharging pipe to the outside of the building.

Moreover, known is a fuel cell electric power generator configured for the purpose of facilitating operations of providing the generator indoors and simplifying air intake and exhaust ducts (see PTL 3, for example). The fuel cell electric power generator disclosed in PTL 3 is provided with air intake and exhaust apparatus having a double-pipe duct structure in which an inner pipe through which exhaust air is discharged to the outside and an outer pipe through which air is introduced from the outside are integrally coupled to each other.

Further, a power generation apparatus including a duct extending in a vertical direction is known, which is configured for the purpose of improving the exhaust performance of an exhaust gas generated by a fuel cell provided inside a building (see PTL 4, for example). In a power generation apparatus disclosed in PTL 4, a duct extending inside a building in a vertical direction and having an upper end portion located outside the building is a double pipe, and a ventilating pipe and an exhaust pipe are coupled to the duct such that an exhaust gas or air flows through the inside or outside of the duct.

EP 1 835 240 A2 relates to a method of operating a combination of a heater with a fuel cell assembly. DE 100 00 405 A1 relates to a heater having a fuel cell arrangement and a burner.

### Citation List

### Patent Literature

PTL 1: Japanese Laid-Open Patent Application Publication No. 2007-248009

PTL 2: Japanese Laid-Open Patent Application Publication No. 2006-73446

PTL 3: Japanese Laid-Open Patent Application Publication No. 2006-253020

PTL 4: Japanese Laid-Open Patent Application Publication No. 2008-210631

### Summary of Invention

### Technical Problem

Here, the electric power generator disclosed in each of PTLs 2 to 4 causes a problem in which when the fuel cell system is operated in a case where a pipe (air discharge pipe, duct) through which the exhaust gas discharged from the electric power generator is discharged is clogged, the exhaust gas, such as a flue gas generated in a burner, discharged from the fuel cell system cannot be discharged to the outside of the building and flows backward into an exterior container in which the electric power generator is contained. Since the exhaust gas flows backward, the high-temperature exhaust gas stays in the exterior container, and this increases the temperature in the exterior container. With this, auxiliary devices (a controller, and the like) contained in the exterior container may not be maintained at temperatures at which the auxiliary devices can normally operate. Thus, the efficiencies of the auxiliary devices may decrease.

The present invention was made in consideration of the above problems, and an object of the present invention is to provide a power generation system and a method of operating the power generation system, each of which is capable of, in a case where a discharge passage through which an exhaust gas to be discharged from a fuel cell system flows is clogged, inhibiting an operation of the fuel cell system to suppress a temperature increase inside a case, thereby suppressing decreases in efficiencies of auxiliary devices contained in the case.

### Solution to Problem

To solve the above conventional problems, a power generation system according to the present invention is defined in claim 1.

Here, "stopping the operation of the power generation system" denotes not only "stopping the power generation system that is operating" but also "inhibiting the operation start of the power generation system". Moreover, regarding "inhibiting the operation of the power generation system", the operations of all the devices constituting the power generation system do not have to be inhibited. That is, "inhibiting the operation of the power generation system" denotes that the operations of a part of respective devices constituting the power generation system may be inhibited as long as the operational advantages of the present invention can be obtained.

With this, in a case where the discharge passage is clogged, the temperature increase inside the case can be suppressed, and therefore, the decreases in efficiencies of the auxiliary devices stored in the case can be suppressed. Herein, "clogging" is not limited to a case where the discharge passage is completely closed, but denotes a case where the discharge passage clogs, and the flow rate of the exhaust gas flowing through the discharge passage decreases.

In the power generation system according to the present invention, the clogging detector may be constituted by a flow rate detector, and in a case where a flow rate detected by the flow rate detector is equal to or lower than a preset first flow rate, the controller may determine that the discharge passage is clogged.

In the power generation system according to the present invention, the clogging detector may be constituted by a pressure detector, and in a case where the pressure detector detects pressure equal to or higher than preset first pressure, the controller may determine that the discharge passage is clogged.

In the power generation system according to the present invention, in a case where a pressure difference between pressure detected by the pressure detector before a predetermined time and pressure detected by the pressure detector after the predetermined time is equal to or smaller than a preset first pressure difference, the controller may determine that the discharge passage is clogged.

In the power generation system according to the present invention, the fuel cell system may further include a hydrogen generator including a reformer configured to generate a hydrogen-containing fuel gas from a raw material and water and a combustor configured to heat the reformer, the clogging detector may be constituted by a gas composition detector, and in a case where the gas composition detector detects an abnormality of a gas composition, the controller may determine that the discharge passage is clogged.

In the power generation system according to the present invention, the clogging detector may be constituted by an oxygen concentration detector, and in a case where an oxygen concentration detected by the oxygen concentration detector is equal to or lower than a preset first oxygen concentration, the controller may determine that the discharge passage is clogged.

In the power generation system according to the present invention, the clogging detector may be constituted by a gas concentration detector configured to detect a gas concentration that is at least a carbon monoxide concentration or a carbon dioxide concentration, and in a case where the gas concentration detected by the gas concentration detector is equal to or higher than a preset first gas concentration, the controller may determine that the discharge passage is clogged.

In the power generation system according to the present invention, the clogging detector may be constituted by a temperature detector, and in a case where a temperature detected by the temperature detector is equal to or higher than a preset first temperature, the controller may determine that the discharge passage is clogged.

In the power generation system according to the present invention, the clogging detector may be constituted by a temperature detector, and in a case where a temperature difference between a temperature detected by the temperature detector before a predetermined time and a temperature detected by the temperature detector after the predetermined time is equal to or larger than a preset first temperature difference or in a case where the temperature difference is equal to or smaller than a second temperature difference smaller than the first temperature difference, the controller may determine that the discharge passage is clogged.

In the power generation system according to the present invention, in a case where the controller operates the combustion device and detects the clogging of the discharge passage, the controller may stop at least the operation of the combustion device.

In the power generation system according to the present invention, in a case where the controller operates the fuel cell system and detects the clogging of the discharge passage, the controller may stop at least the operation of the fuel cell system.

In the power generation system according to the present invention, the controller may stop an operation of the power generation system and inhibit start-up of the power generation system.

Further, in the power generation system according to the present invention, the air intake passage may be provided so as to exchange heat with the discharge passage.

A method of operating a power generation system according to the present invention is defined in claim 14.

With this, in a case where the discharge passage is clogged, the temperature increase inside the case can be suppressed, and therefore, the decreases in efficiencies of the auxiliary devices stored in the case can be suppressed.

### Advantageous Effects of Invention

According to the power generation system of the present invention and the method of operating the power generation system, in a case where the discharge passage is clogged, the temperature increase inside the case can be suppressed, and therefore, the decreases in efficiencies of the auxiliary devices stored in the case can be suppressed.

### Brief Description of Drawings

[Fig. 1] Fig. 1 is a schematic diagram showing a schematic configuration of a power generation system according to Illustrative Embodiment 1.
[Fig. 2] Fig. 2 is a flow chart schematically showing an exhaust gas inflow suppressing operation of the power generation system according to Illustrative Embodiment 1.
[Fig. 3] Fig. 3 is a schematic diagram showing a schematic configuration of the power generation system of Modification Example 1 of Illustrative Embodiment 1.
[Fig. 4] Fig. 4 is a flow chart schematically showing the exhaust gas inflow suppressing operation of the power generation system of Modification Example 1 of Illustrative Embodiment 1.
[Fig. 5] Fig. 5 is a schematic diagram showing a schematic configuration of the power generation system of Modification Example 2 of Illustrative Embodiment 1.
[Fig. 6] Fig. 6 is a schematic diagram showing a schematic configuration of the power generation system of Modification Example 3 of Illustrative Embodiment 1.
[Fig. 7] Fig. 7 is a flow chart schematically showing the exhaust gas inflow suppressing operation of the power generation system of Modification Example 3 of Illustrative Embodiment 1.
[Fig. 8] Fig. 8 is a flow chart schematically showing the exhaust gas inflow suppressing operation of the power generation system of Modification Example 3 of Illustrative Embodiment 1.
[Fig. 9] Fig. 9 is a schematic diagram showing a schematic configuration of the power generation system according to Illustrative Embodiment 2.
[Fig. 10] Fig. 10 is a schematic diagram showing a schematic configuration of the power generation system of Modification Example 1 of Illustrative Embodiment 2.
[Fig. 11] Fig. 11 is a flow chart schematically showing the exhaust gas inflow suppressing operation of the power generation system of Modification Example 1 of Illustrative Embodiment 2.
[Fig. 12] Fig. 12 is a schematic diagram showing a schematic configuration of a fuel cell system of Modification Example 2 of Illustrative Embodiment 2.
[Fig. 13] Fig. 13 is a flow chart schematically showing the exhaust gas inflow suppressing operation of the power generation system of Modification Example 2 of Illustrative Embodiment 2.
[Fig. 14] Fig. 14 is a schematic diagram showing a schematic configuration of the fuel cell system of Modification Example 3 of Illustrative Embodiment 2.
[Fig. 15] Fig. 15 is a flow chart schematically showing the exhaust gas inflow suppressing operation of the power generation system of Modification Example 3 of Illustrative Embodiment 2.
[Fig. 16] Fig. 16 is a schematic diagram showing a schematic configuration of the power generation system according to Embodiment 3 of the present invention.
[Fig. 17] Fig. 17 is a flow chart schematically showing the exhaust gas inflow suppressing operation of the power generation system according to Embodiment 3.
[Fig. 18] Fig. 18 is a schematic diagram showing a schematic configuration of the power generation system of Modification Example 1 of Embodiment 3.
[Fig. 19] Fig. 19 is a flow chart schematically showing the exhaust gas inflow suppressing operation of the power generation system of Modification Example 1 of Embodiment 3.
[Fig. 20] Fig. 20 is a flow chart schematically showing the exhaust gas inflow suppressing operation of the power generation system of Modification Example 2 of Embodiment 3.
[Fig. 21] Fig. 21 is a schematic diagram showing a schematic configuration of the power generation system of Modification Example 3 of Embodiment 3.

### Description of Embodiments

Hereinafter, preferred embodiments of the present invention will be explained in reference to the drawings. In the drawings, the same reference signs are used for the same or corresponding components, and a repetition of the same explanation is avoided. Moreover, in the drawings, only components necessary to explain the present invention are shown, and the other components are not shown. Further, the present invention is not limited to the following embodiments.

**Illustrative Embodiment 1** not part of the invention but represents background art useful for understanding the invention.

A power generation system according to Illustrative Embodiment 1 of the present invention includes a fuel cell system, a case, a discharge passage, a ventilator, a clogging detector, and a controller, and the controller stops an operation of the power generation system when it detects clogging of the discharge passage based on information from the clogging detector.

Here, "stopping the operation of the power generation system" denotes not only "stopping the power generation system that is operating" but also "inhibiting the operation start of the power generation system". Moreover, regarding "inhibiting the operation of the power generation system", the operations of all the devices constituting the power generation system do not have to be inhibited. That is, "inhibiting the operation of the power generation system" denotes that the operations of a part of respective devices constituting the power generation system may be inhibited as long as the operational advantages of the present invention can be obtained. Examples of a device whose operation is inhibited include a hydrogen generator configured to generate a fuel gas, a fan configured to supply air, and a combustor, such as a burner, configured to heat the hydrogen generator. In contrast, examples of a device whose operation is not inhibited but allowed include devices (such as a pump through which cooling water for cooling a fuel cell flows) that do not generate or discharge a gas.

### Configuration of Power Generation System

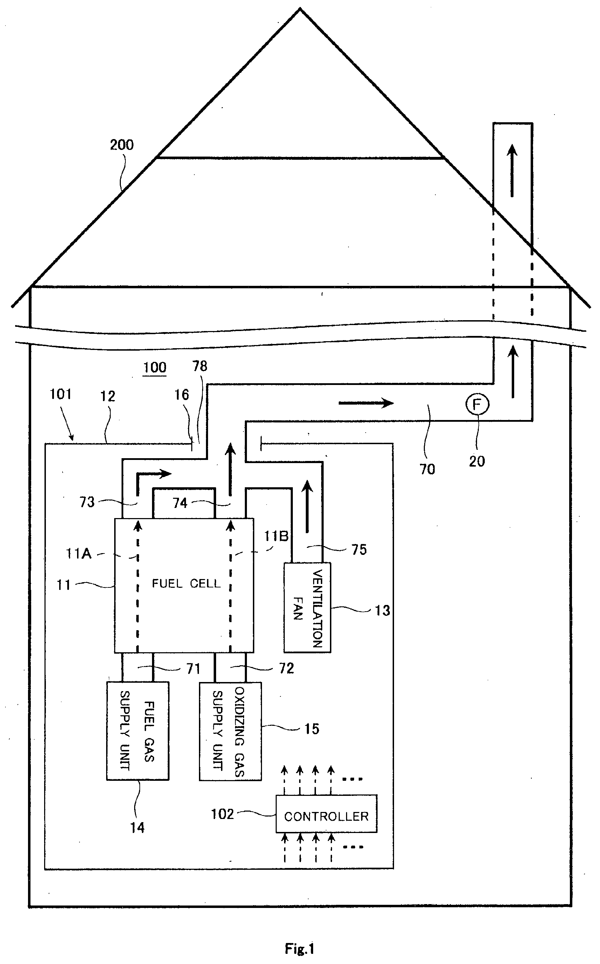

Fig. 1 is a schematic diagram showing a schematic configuration of the power generation system according to Illustrative Embodiment 1.

As shown in Fig. 1, a power generation system 100 according to Embodiment 1 of the present invention is provided in a building 200. The power generation system 100 includes a fuel cell system 101, a discharge passage 70, a flow rate detector 20, and a controller 102. The fuel cell system 101 includes a fuel cell 11. The controller 102 inhibits the operation of the power generation system 100 when it detects clogging of the discharge passage 70 based on information from the clogging detector (in Illustrative Embodiment 1, the flow rate detector 20).

In Embodiment 1, the power generation system 100 is provided in the building 200. However, the present illustrative embodiment is not limited to this. The power generation system 100 may be provided outside the building 200.

The fuel cell system 101 includes a case 12. The fuel cell 11, a ventilation fan 13, a fuel gas supply unit 14, and an oxidizing gas supply unit 15 are provided in the case 12. The controller 102 is also provided in the case 12. In Embodiment 1, the controller 102 is provided in the case 12 of the fuel cell system 101. However, the present illustrative embodiment is not limited to this. The controller 102 may be provided outside the case 12.

An air supply port 16 penetrating a wall constituting the case 12 in a thickness direction of the wall is formed at an appropriate position of the wall. A pipe constituting the discharge passage 70 is inserted through the air supply port 16 such that a gap is formed between the air supply port 16 and the discharge passage 70. The gap between the air supply port 16 and the discharge passage 70 constitutes an air intake passage 78. With this, the air outside the power generation system 100 is supplied through the air intake passage 78 to the inside of the case 12.

In Illustrative Embodiment 1, the hole through which the pipe constituting the discharge passage 70 is inserted and the air supply port 16 that is formed on the air intake passage and serves as an air intake opening through which air is taken into the case 12 are constituted by one hole. However, the present illustrative embodiment is not limited to this. The hole through which the pipe constituting the discharge passage 70 is inserted and the hole constituting the air supply port 16 (air intake passage 78) may be separately formed on the case 12. The air supply port 16 may be constituted by one hole on the case 12 or may be constituted by a plurality of holes on the case 12. Further, the air intake passage 78 may be formed by inserting a pipe through the air supply port 16.

The fuel gas supply unit 14 may have any configuration as long as it can supply a fuel gas (hydrogen gas) to the fuel cell 11 while adjusting the flow rate of the fuel gas. The fuel gas supply unit 14 may be configured by a device, such as a hydrogen generator, a hydrogen bomb, or a hydrogen absorbing alloy, configured to supply the hydrogen gas. The fuel cell 11 (to be precise, an inlet of a fuel gas channel 1A of the fuel cell 11) is connected to the fuel gas supply unit 14 through a fuel gas supply passage 71.

The oxidizing gas supply unit 15 may have any configuration as long as it can supply an oxidizing gas (air) to the fuel cell 11 while adjusting the flow rate of the oxidizing gas. The oxidizing gas supply unit 15 may be constituted by a fan, a blower, or the like. The fuel cell 11 (to be precise, an inlet of an oxidizing gas channel 11B of the fuel cell 11) is connected to the oxidizing gas supply unit 15 through an oxidizing gas supply passage 72.

The fuel cell 11 includes an anode and a cathode (both not shown). In the fuel cell 11, the fuel gas supplied to the fuel gas channel 11A is supplied to the anode while the fuel gas is flowing through the fuel gas channel 11 A. The oxidizing gas supplied to the oxidizing gas channel 11 B is supplied to the cathode while the oxidizing gas is flowing through the oxidizing gas channel 11B. The fuel gas supplied to the anode and the oxidizing gas supplied to the cathode react with each other to generate electricity and heat.

The generated electricity is supplied to an external electric power load (for example, a home electrical apparatus) by an electric power conditioner, not shown. The generated heat is recovered by a heat medium flowing through a heat medium channel, not shown. The heat recovered by the heat medium can be used to, for example, heat water.

In Illustrative Embodiment 1, each of various fuel cells, such as a polymer electrolyte fuel cell, a direct internal reforming type solid-oxide fuel cell, and an indirect internal reforming type solid-oxide fuel cell, may be used as the fuel cell 11. In Embodiment 1, the fuel cell 11 and the fuel gas supply unit 14 are configured separately. However, the present embodiment is not limited to this. Like a solid-oxide fuel cell, the fuel gas supply unit 14 and the fuel cell 11 may be configured integrally. In this case, the fuel cell 11 and the fuel gas supply unit 14 are configured as one unit covered with a common heat insulating material, and a combustor 14b described below can heat not only a reformer 14a described below but also the fuel cell 11. In the direct internal reforming type solid-oxide fuel cell, since the anode of the fuel cell 11 has the function of the reformer 14a, the anode of the fuel cell 11 and the reformer 14a may be configured integrally. Further, since the configuration of the fuel cell 11 is similar to that of a typical fuel cell, a detailed explanation thereof is omitted.

An upstream end of an off fuel gas passage 73 is connected to an outlet of the fuel gas channel 11 A. A downstream end of the off fuel gas passage 73 is connected to the discharge passage 70. An upstream end of an off oxidizing gas passage 74 is connected to an outlet of the oxidizing gas channel 11B. A downstream end of the off oxidizing gas passage 74 is connected to the discharge passage 70.

With this, the fuel gas unconsumed in the fuel cell 11 (hereinafter referred to as an "off fuel gas") is discharged from the outlet of the fuel gas channel 11 A through the off fuel gas passage 73 to the discharge passage 70. The oxidizing gas unconsumed in the fuel cell 11 (hereinafter referred to as an "off oxidizing gas") is discharged from the outlet of the oxidizing gas channel 11B through the off oxidizing gas passage 74 to the discharge passage 70. The off fuel gas discharged to the discharge passage 70 is diluted by the off oxidizing gas to be discharged to the outside of the building 200.

The ventilation fan (ventilator) 13 is connected to the discharge passage 70 through a ventilation passage 75. The ventilation fan 13 may have any configuration as long as it can ventilate the inside of the case 12. With this, the air outside the power generation system 100 is supplied through the air supply port 16 to the inside of the case 12, and the gas (mainly, air) in the case 12 is discharged through the ventilation passage 75 and the discharge passage 70 to the outside of the building 200 by activating the ventilation fan 13. Thus, the inside of the case 12 is ventilated.

In Illustrative Embodiment 1, the fan is used as a ventilator. However, the present embodiment is not limited to this. A blower may be used as the ventilator. The ventilation fan 13 is provided in the case 12. However, the present illustrative embodiment is not limited to this. The ventilation fan 13 may be provided in the discharge passage 70. An air supply passage through which air is supplied may be connected to the ventilation fan 13. In this case, the air supply passage may be regarded as an internal space of the case 12, and the clogging detector may be provided in the air supply passage.

As above, in Illustrative Embodiment 1, the off fuel gas, the off oxidizing gas, and the gas in the case 12 discharged by the operation of the ventilation fan 13 are exemplified as the exhaust gas discharged from the power generation system 100. The exhaust gas discharged from the power generation system 100 is not limited to these gases. For example, in a case where the fuel gas supply unit 14 is constituted by a hydrogen generator, the exhaust gas discharged from the power generation system 100 may be a gas (a flue gas, a hydrogen-containing gas, or the like) discharged from the hydrogen generator.

The discharge passage 70 is configured such that an upstream end thereof extends into the case 12, and the exhaust gas discharged from the power generation system 100 flows therethrough. The discharge passage 70 is formed so as to extend to the outside of the building 200, and a downstream end (opening) thereof is open to the atmosphere. The flow rate detector 20 configured to detect the flow rate of the gas in the discharge passage 70 is provided at an appropriate position of the discharge passage 70. The flow rate detector 20 may have any configuration as long as it can detect the flow rate of the gas in the discharge passage 70. A device to be used as the flow rate detector 20 is not limited.

In Illustrative Embodiment 1, the flow rate detector 20 is provided in the discharge passage 70. However, the present illustrative embodiment is not limited to this. The flow rate detector 20 may be configured such that a sensor portion thereof is provided in the discharge passage 70, and the other portion thereof is provided outside the discharge passage 70. The flow rate detector 20 may be provided at an appropriate position of any one of an off fuel gas passage 73, off oxidizing gas passage 74, and ventilation passage 75 communicating with the discharge passage 70.

The controller 102 may be any device as long as it controls respective devices constituting the power generation system 100. The controller 102 includes a calculation processing module, such as a microprocessor or a CPU, and a storage module, such as a memory, configured to store programs for executing respective control operations. In the controller 102, the calculation processing module reads out and executes a predetermined control program stored in the storage module. Thus, the controller 102 processes the information and performs various control operations, such as the above control operations, regarding the power generation system 100.

The controller 102 may be constituted by a single controller or may be constituted by a group of a plurality of controllers which cooperate to execute control operations of the power generation system 100. The controller 102 may be constituted by a microcontroller or may be constituted by a MPU, a PLC (Programmable Logic Controller), a logic circuit, or the like.

### Operations of Power Generation System

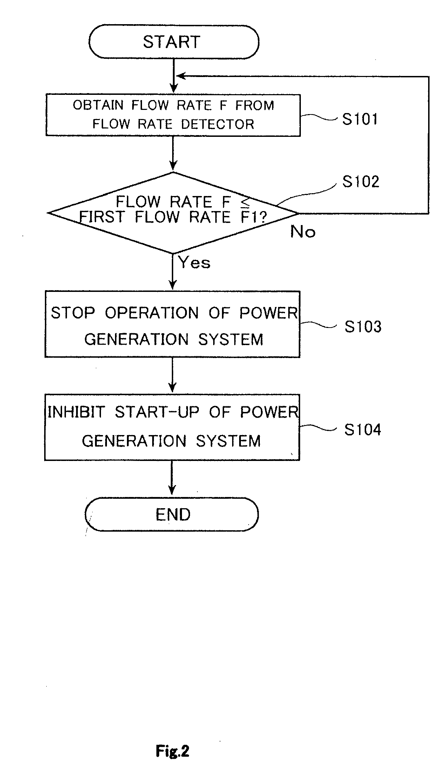

Next, the operations of the power generation system 100 according to Illustrative Embodiment 1 will be explained in reference to Figs. 1 and 2. Since the electric power generating operation of the fuel cell system 101 of the power generation system 100 is performed in the same manner as the electric power generating operation of a typical fuel cell system, a detailed explanation thereof is omitted.

Fig. 2 is a flow chart schematically showing an exhaust gas inflow suppressing operation of the power generation system according to Illustrative Embodiment 1.

As shown in Fig. 2, while the power generation system 100 is operating, the controller 102 obtains a flow rate F of the gas in the discharge passage 70, the flow rate F being detected by the flow rate detector 20 (Step S101). Here, "while the power generation system 100 is operating" denotes a period in which the exhaust gas is being discharged from the power generation system 100 to the discharge passage 70. In Illustrative Embodiment 1, "while the power generation system 100 is operating" denotes a period in which at least one of the fuel gas supply unit 14, the oxidizing gas supply unit 15, and the ventilation fan 13 is operating.

Next, the controller 102 determines whether or not the flow rate F obtained in Step S101 is equal to or lower than a first flow rate F1 (Step S102). Here, the first flow rate F1 may be set as, for example, a flow rate range of the exhaust gas when the exhaust gas discharged from the power generation system 100 flows through the discharge passage 70, the flow rate range being obtained in advance by an experiment or the like.

In a case where the flow rate F obtained in Step S101 is higher than the first flow rate F1 (No in Step S102), the controller 102 returns to Step S101 and repeats Steps S101 and S102 until the flow rate F becomes higher than the first flow rate F1. In contrast, in a case where the flow rate F obtained in Step S101 is equal to or lower than the first flow rate F1 (Yes in Step S102), the controller 102 determines that the discharge passage 70 is clogged and proceeds to Step S103.

In Step S103, the controller 102 stops the operation of the power generation system 100. With this, the discharge of the exhaust gas from the power generation system 100 to the discharge passage 70 is stopped, and the backward flow of the exhaust gas from the discharge passage 70 into the case 12 is suppressed.

Next, the controller 102 inhibits the start-up of the power generation system 100 (Step S104). Specifically, for example, the controller 102 inhibits the start-up of the power generation system 100 by not allowing a start-up operation of the power generation system 100 even in a case where a user of the power generation system 100 causes a remote controller, not shown, to transmit a start-up request signal to the controller 102 or even in a case where a start-up time of the power generation system 100 has come.

As above, in the power generation system 100 according to Illustrative Embodiment 1, if the clogging detector detects the clogging of the discharge passage 70, the controller 102 stops the operation of the power generation system 100. With this, the backward flow of the exhaust gas into the case 12 is suppressed. On this account, the retention of the high-temperature exhaust gas in the case 12 is suppressed, and therefore, the temperature increase inside the case 12 is suppressed. Thus, the decreases in efficiencies of the auxiliary devices (the controller 102 and the like) contained in the case 12 can be suppressed, and the durability of the power generation system 100 can be improved.

In Illustrative Embodiment 1, the discharge passage 70, the off fuel gas passage 73, the off oxidizing gas passage 74, and an exhaust gas passage 77 are explained as different passages. However, the present illustrative embodiment is not limited to this. These passages may be regarded as one discharge passage 70.

### Modification Example 1

Next, the power generation system of Modification Example 1 of Illustrative Embodiment 1 will be explained.

The power generation system of Modification Example 1 of Illustrative Embodiment 1 is configured such that: the clogging detector is constituted by a flow rate detector configured to detect the flow rate of air supplied by the ventilator; the controller controls a manipulated variable of the ventilator based on the flow rate detected by the flow rate detector; and in a case where the manipulated variable of the ventilator is equal to or more than a first manipulated variable, the controller determines that the discharge passage is clogged.

### Configuration of Power Generation System

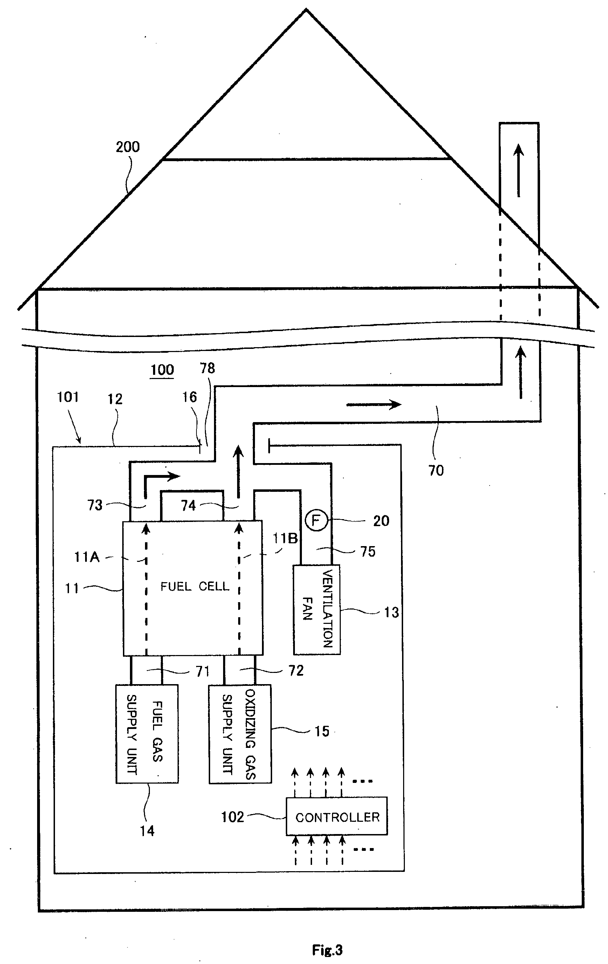

Fig. 3 is a schematic diagram showing a schematic configuration of the power generation system of Modification Example 1 of Illustrative Embodiment 1.

As shown in Fig. 3, the power generation system 100 of Modification Example 1 is the same in basic configuration as the power generation system 100 according to Illustrative Embodiment 1 but is different from the power generation system 100 according to Illustrative Embodiment 1 in that the flow rate detector 20 is disposed on a portion, close to the ventilation fan 13, of the discharge passage 70 (to be precise, the ventilation passage 75) so as to detect the flow rate of the air supplied by the ventilation fan 13. Herein, the ventilation passage 75 is regarded as a passage constituting the discharge passage 70.

Then, the controller 102 controls the manipulated variable of the ventilation fan 13 based on the flow rate detected by the flow rate detector 20. Specifically, for example, in a case where the flow rate detected by the flow rate detector 20 decreases, the controller 102 may increase the manipulated variable of the ventilation fan 13 so as to increase the flow rate of the air flowing through the ventilation passage 75.

### Operations of Power Generation System

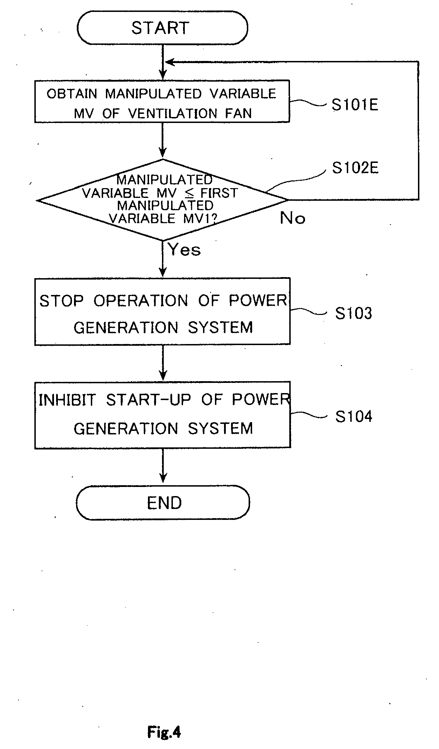

Fig. 4 is a flow chart schematically showing the exhaust gas inflow suppressing operation of the power generation system of Modification Example 1 of Illustrative Embodiment 1.

As shown in Fig. 4, the exhaust gas inflow suppressing operation of the power generation system 100 of Modification Example 1 is basically the same as the exhaust gas inflow suppressing operation of the power generation system 100 according to Illustrative Embodiment 1 but is different from the exhaust gas inflow suppressing operation of the power generation system 100 according to Illustrative Embodiment 1 in that Steps S101E and S102E are performed instead of Steps S101 and S102 of Illustrative Embodiment 1.

Specifically, the controller 102 obtains a manipulated variable MV of the ventilation fan 13 (Step S101E). Specifically, based on the flow rate detected by the flow rate detector 20, the controller 102 obtains from the storage module of the controller 102 the manipulated variable output to the ventilation fan 13.

Next, the controller 102 determines whether or not the manipulated variable MV obtained in Step S101E is equal to or more than a first manipulated variable MV1 (Step S102E). Here, the first manipulated variable MV1 may be set as, for example, a manipulated variable range of the ventilation fan 13 when the exhaust gas discharged from the power generation system 100 flows through the discharge passage 70 in a case where the controller 102 controls the manipulated variable MV of the ventilation fan 13 such that the flow rate detector 20 detects a predetermined flow rate, the manipulated variable range being obtained in advance by an experiment, a simulation, or the like.

In a case where the manipulated variable MV obtained in Step S101E is less than the first manipulated variable MV1 (No in Step S102E), the controller 102 returns to Step S101E and repeats Steps S101E and S102E until the manipulated variable MV becomes the first manipulated variable MV1 or more. In contrast, in a case where the manipulated variable MV obtained in Step S101E is equal to or more than the first manipulated variable MV1 (Yes in Step S102E), the controller 102 proceeds to Step S103. In Step S103, the controller 102 stops the operation of the power generation system 100.

The power generation system 100 of Modification Example 1 configured as above also has the same operational advantages as the power generation system 100 according to Embodiment 1.

### Modification Example 2

The power generation system of Modification Example 2 of Illustrative Embodiment 1 is configured such that the hole through which the pipe constituting the discharge passage is inserted and the hole through which the pipe constituting the air intake passage is inserted are separately formed on the case.

### Configuration of Power Generation System

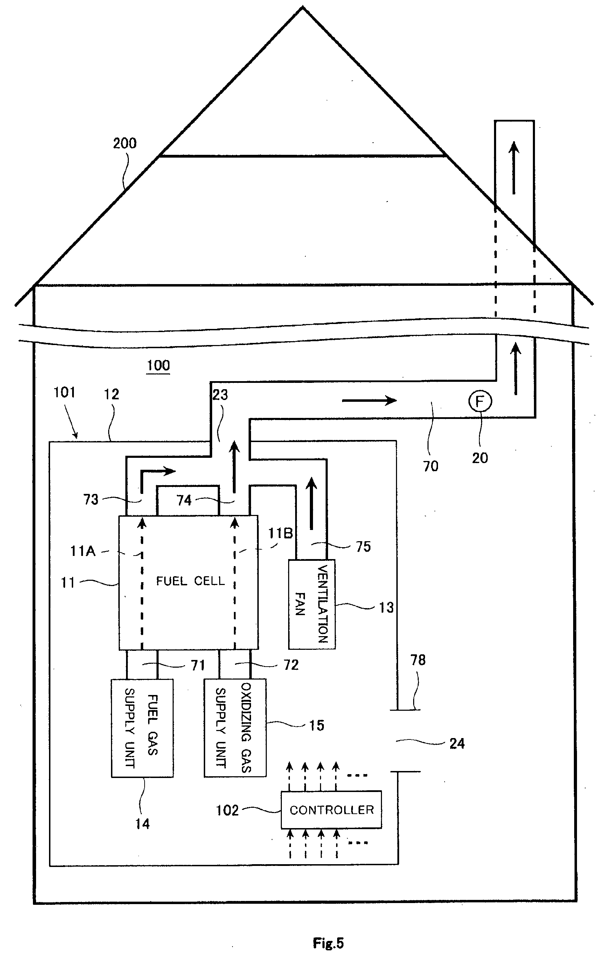

Fig. 5 is a schematic diagram showing a schematic configuration of the power generation system of Modification Example 2 of Illustrative Embodiment 1.

As shown in Fig. 5, the power generation system 100 of Modification Example 2 is the same in basic configuration as the power generation system 100 according to Illustrative Embodiment 1 but is different from the power generation system 100 according to Illustrative Embodiment 1 in that: two holes 23 and 24 are formed on the case 12; the pipe constituting the discharge passage 70 is inserted through the hole 23; and the pipe constituting the air intake passage 78 is inserted through the hole 24.

The power generation system 100 of Modification Example 2 configured as above also has the same operational advantages as the power generation system 100 according to Illustrative Embodiment 1. In Modification Example 2, the air intake passage 78 is formed by inserting the pipe through the hole 24. However, the present modification example is not limited to this. Without inserting the pipe through the hole 24, the hole 24 may be used as the air supply port (air intake passage 78).

### Modification Example 3

Next, the power generation system of Modification Example 3 of Illustrative Embodiment 1 will be explained.

The power generation system of Modification Example 3 of Illustrative Embodiment 1 is configured such that: the clogging detector is a pressure detector; and in a case where the gas pressure detected by the pressure detector is equal to or higher than first pressure, the controller determines that the discharge passage is clogged.

### Configuration of Power Generation System

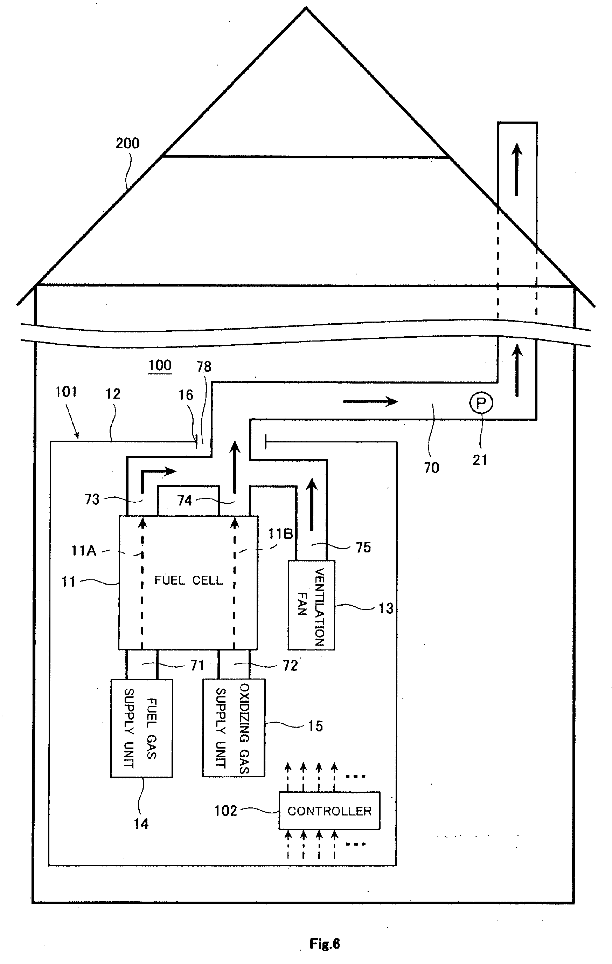

Fig. 6 is a schematic diagram showing a schematic configuration of the power generation system of Modification Example 3 of Illustrative Embodiment 1.

As shown in Fig. 6, the power generation system 100 of Modification Example 3 is the same in basic configuration as the power generation system 100 according to Illustrative Embodiment 1 but is different from the power generation system 100 according to Illustrative Embodiment 1 in that a pressure detector 21 is provided instead of the flow rate detector 20. The pressure detector 21 may have any configuration as long as it can detect the pressure in the discharge passage 70. A device to be used as the pressure detector 21 is not limited. In Modification Example 3, the pressure detector 21 is provided in the discharge passage 70. However, the present modification example is not limited to this. The pressure detector 21 may be configured such that a sensor portion thereof is provided in the discharge passage 70, and the other portion thereof is provided outside the discharge passage 70. The pressure detector 21 may be provided at an appropriate position of any one of the off fuel gas passage 73, off oxidizing gas passage 74, and ventilation passage 75 communicating with the discharge passage 70.

### Operations of Power Generation System

Here, in Fig. 6, in a case where the discharge passage 70 clogs at a portion located downstream of a portion where the pressure detector 21 is provided, the pressure detected by the pressure detector 21 after the clogging of the discharge passage 70 becomes higher than the pressure detected by the pressure detector 21 before the clogging of the discharge passage 70. Therefore, in a case where the pressure detected by the pressure detector 21 is higher than the first pressure that is a highest value in a pressure range in the discharge passage 70 when the power generation system 100 is operating and the discharge passage 70 is not clogged, the controller 102 can determine that the discharge passage 70 is clogged.

In a case where the discharge passage 70 clogs at a portion located upstream of the portion where the pressure detector 21 is provided, the pressure detected by the pressure detector 21 after the clogging of the discharge passage 70 becomes lower than the pressure detected by the pressure detector 21 before the clogging of the discharge passage 70. Therefore, in a case where the pressure detected by the pressure detector 21 is lower than second pressure that is a lowest value in the pressure range in the discharge passage 70 when the power generation system 100 is operating and the discharge passage 70 is not clogged, the controller 102 can determine that the discharge passage 70 is clogged.

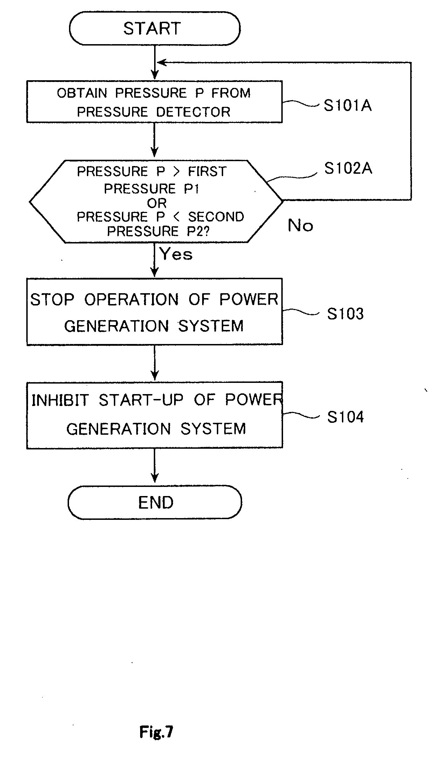

To be specific, in a case where the pressure detected by the pressure detector 21 is outside a predetermined pressure range, the controller 102 can determine that the discharge passage 70 is clogged. Hereinafter, the exhaust gas inflow suppressing operation of the power generation system 100 by the controller 102 based on the pressure detected by the pressure detector 21 will be explained in reference to Fig. 7.

Fig. 7 is a flow chart schematically showing the exhaust gas inflow suppressing operation of the power generation system of Modification Example 3 of Illustrative Embodiment 1.

As shown in Fig. 7, the exhaust gas inflow suppressing operation of the power generation system 100 of Modification Example 3 is basically the same as the exhaust gas inflow suppressing operation of the power generation system 100 according to Illustrative Embodiment 1 but is different from the exhaust gas inflow suppressing operation of the power generation system 100 according to Illustrative Embodiment 1 in that Steps S101A and S102A are performed instead of Steps S101 and S102 of Illustrative Embodiment 1.

Specifically, the controller 102 obtains pressure P in the discharge passage 70 detected by the pressure detector 21 (Step S101A). Next, the controller 102 determines whether or not the pressure P obtained in Step S101A is higher than a first pressure P1 or whether or not the pressure P obtained in Step S101A is lower than a second pressure P2 (Step S102A).

Here, the first pressure P1 may be set as, for example, a highest value in a pressure range in the discharge passage 70 when the exhaust gas discharged from the power generation system 100 flows through the discharge passage 70, the pressure range being obtained in advance by an experiment or the like. Moreover, the first pressure P1 may be set as, for example, pressure in the discharge passage 70 when the fuel gas supply unit 14, the oxidizing gas supply unit 15, and the ventilation fan 13 respectively operate by maximum manipulated variables or may be set as 40 kPa. The second pressure P2 may be set as, for example, a lowest value in a pressure range in the discharge passage 70 when the exhaust gas discharged from the power generation system 100 flows through the discharge passage 70, the pressure range being obtained in advance by an experiment or the like. Further, the second pressure P2 may be set as, for example, a value equal to or higher than pressure that is the lowest among the pressure in the discharge passage 70 when the fuel gas supply unit 14 operates by the maximum manipulated variable, the pressure in the discharge passage 70 when the oxidizing gas supply unit 15 operates by the maximum manipulated variable, and the pressure in the discharge passage 70 when the ventilation fan 13 operates by the maximum manipulated variable. Or, the second pressure P2 may be set as 1 kPa.

In a case where the pressure P obtained in Step S101A is equal to or higher than the second pressure P2 and equal to or lower than the first pressure P1 (No in Step S102A), the controller 102 returns to Step S101A and repeats Steps S101A and S102A until the pressure P becomes higher than the first pressure P1 or lower than the second pressure P2. In contrast, in a case where the pressure P obtained in Step S101A is higher than the first pressure P1 or lower than the second pressure P2 (Yes in Step S102A), the controller 102 proceeds to Step S103.

In Step S103, the controller 102 stops the operation of the power generation system 100.

In Fig. 6, in a case where the discharge passage 70 clogs at a portion located upstream of the portion where the pressure detector 21 is provided, a pressure difference between the pressure detected by the pressure detector 21 before the clogging of the discharge passage 70 and the pressure detected by the pressure detector 21 after the clogging of the discharge passage 70 becomes small. Therefore, in a case where the pressure difference between the pressure detected by the pressure detector 21 before a predetermined time and the pressure detected by the pressure detector 21 after the predetermined time is equal to or smaller than a predetermined first pressure difference, the controller 102 can determine that the discharge passage 70 is clogged.

In a case where the discharge passage 70 clogs at a portion located downstream of the portion where the pressure detector 21 is provided, the pressure difference between the pressure detected by the pressure detector 21 before the clogging of the discharge passage 70 and the pressure detected by the pressure detector 21 after the clogging of the discharge passage 70 becomes large. Therefore, in a case where the pressure difference between the pressure detected by the pressure detector 21 before the predetermined time and the pressure detected by the pressure detector 21 after the predetermined time is equal to or larger than a second pressure difference larger than the first pressure difference, the controller 102 can determine that the discharge passage 70 is clogged.

To be specific, in a case where the pressure difference between the pressure detected by the pressure detector 21 before the predetermined time and the pressure detected by the pressure detector 21 after the predetermined time is outside a predetermined pressure difference range, the controller 102 can determine that the discharge passage 70 is clogged.

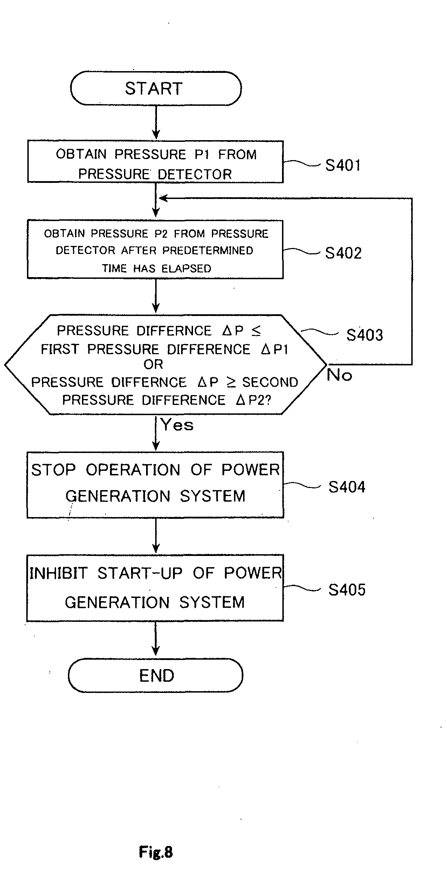

Hereinafter, the exhaust gas inflow suppressing operation of the power generation system 100 by the controller 102 based on the pressure difference between the pressures detected by the pressure detector 21 will be explained in reference to Fig. 8.

Fig. 8 is a flow chart schematically showing the exhaust gas inflow suppressing operation of the power generation system of Modification Example 3 of Illustrative Embodiment 1.

As shown in Fig. 8, the controller 102 obtains the pressure P1 in the discharge passage 70 detected by the pressure detector 21 (Step S401). Next, after a predetermined time has elapsed, the controller 102 again obtains the pressure P2 in the discharge passage 70 from the pressure detector 21 (Step S402). Here, the predetermined time may be set arbitrarily, and for example, several seconds, several tens of seconds, or several minutes.

Next, the controller 102 determines whether or not a pressure difference ΔP between the pressure P1 obtained in Step S401 and the pressure P2 obtained in Step S402 is equal to or smaller than a preset first pressure difference ΔP1 or equal to or larger than a second pressure difference ΔP2 larger than the first pressure difference ΔP1 (Step S403). Here, the first pressure difference ΔP1 may be set as, for example, a lowest value in a range of the pressure difference between the pressure when the discharge passage 70 is not clogged and the pressure when the discharge passage 70 is clogged, the range being obtained in advance by an experiment or the like. Similarly, the second pressure difference ΔP2 may be set as, for example, a highest value in a range of the pressure difference between the pressure when the discharge passage 70 is not clogged and the pressure when the discharge passage 70 is clogged, the range being obtained in advance by an experiment or the like.

In a case where the pressure difference ΔP is larger than the first pressure difference ΔP1 and smaller than the second pressure difference ΔP2 (No in Step S403), the controller 102 returns to Step S401 and repeats Steps S401 to S403 until the pressure difference ΔP becomes equal to or smaller than the first pressure difference ΔP1 or equal to or larger than the second pressure difference ΔP2. In contrast, in a case where the pressure difference ΔP is equal to or smaller than the first pressure difference ΔP1 or equal to or larger than the second pressure difference ΔP2 (Yes in Step S403), the controller 102 determines that the discharge passage 70 is clogged, and proceeds to Step S404.

In Step S404, the controller 102 stops the operation of the power generation system 100. Next, the controller 102 inhibits the start-up of the power generation system 100 (Step S405).

The power generation system 100 of Modification Example 3 configured as above also has the same operational advantages as the power generation system 100 according to Illustrative Embodiment 1.

**Illustrative Embodiment 2** not part of the invention but represents background art useful for understanding the invention.

The power generation system according to Illustrative Embodiment 2 further includes a hydrogen generator including a reformer configured to generate a fuel gas from a raw material and water and a combustor configured to heat the reformer.

### Configuration of Power Generation System

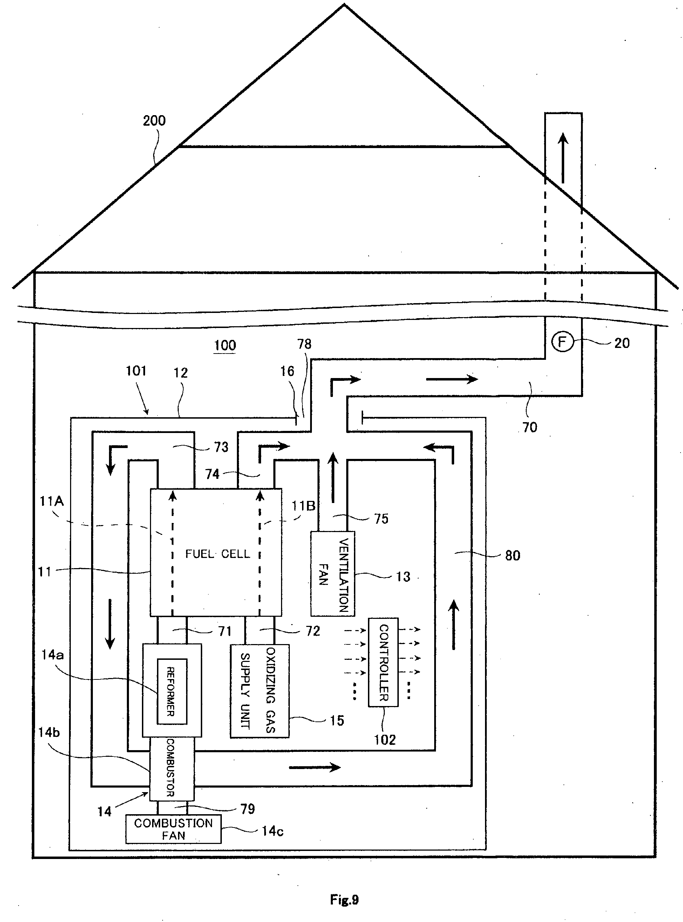

Fig. 9 is a schematic diagram showing a schematic configuration of the power generation system according to Illustrative Embodiment 2.

As shown in Fig. 9, the power generation system 100 according to Illustrative Embodiment 2 of the present invention is the same in basic configuration as the power generation system 100 according to Illustrative Embodiment 1 but is different from the power generation system 100 according to Illustrative Embodiment 1 in that: the fuel gas supply unit 14 is constituted by a hydrogen generator 14; and the off fuel gas passage 73 is connected to a combustor 14b of the hydrogen generator 14. Specifically, the hydrogen generator 14 includes a reformer 14a, the combustor 14b, and a combustion fan 14c.

The downstream end of the off fuel gas passage 73 is connected to the combustor 14b. The off fuel gas flows from the fuel cell 11 through the off fuel gas passage 73 to be supplied to the combustor 14b as the combustion fuel. The combustion fan 14c is connected to the combustor 14b through an air supply passage 79. The combustion fan 14c may have any configuration as long as it can supply the combustion air to the combustor 14b. For example, the combustion fan 14c may be constituted by a fan, a blower, or the like.

The combustor 14b combusts the supplied off fuel gas and combustion air to generate the flue gas and heat. The flue gas generated in the combustor 14b heats the reformer 14a and the like, and then, is discharged to a flue gas passage 80. The flue gas discharged to the flue gas passage 80 flows through the flue gas passage 80 to be discharged to the discharge passage 70. The flue gas discharged to the discharge passage 70 flows through the discharge passage 70 to be discharged to the outside of the power generation system 100 (building 200).

A raw material supply unit and a water supply unit (both not shown) are connected to the reformer 14a, and the raw material and the water are supplied to the reformer 14a. The supplied water is heated in the reformer 14a to become steam. Examples of the raw material include a natural gas containing methane as a major component and a LP gas containing propane as a major component.

The reformer 14a includes a reforming catalyst. The reforming catalyst may be any material as long as, for example, it can serve as a catalyst in a steam-reforming reaction by which the hydrogen-containing gas is generated from the raw material and the steam. Examples of the reforming catalyst include a ruthenium-based catalyst in which a catalyst carrier, such as alumina, supports ruthenium (Ru) and a nickel-based catalyst in which the same catalyst carrier as above supports nickel (Ni).

In the reformer 14a, the hydrogen-containing gas is generated by the reforming reaction between the supplied raw material and steam. The generated hydrogen-containing gas flows as the fuel gas through the fuel gas supply passage 71 to be supplied to the fuel gas channel 11 A of the fuel cell 11.

Illustrative Embodiment 2 is configured such that the hydrogen-containing gas generated in the reformer 14a is supplied as the fuel gas to the fuel cell 11. However, the present embodiment is not limited to this. Illustrative Embodiment 2 may be configured such that the hydrogen-containing gas flowed through a shift converter or carbon monoxide remover provided in the hydrogen generator 14 is supplied to the fuel cell 11, the shift converter including a shift catalyst (such as a copper-zinc-based catalyst) for reducing carbon monoxide in the hydrogen-containing gas supplied from the reformer 14a, the carbon monoxide remover including an oxidation catalyst (such as a ruthenium-based catalyst) or a methanation catalyst (such as a ruthenium-based catalyst).

The combustor 14b is configured such that the off fuel gas is supplied as a combustion fuel from the fuel cell 11. However, the present illustrative embodiment is not limited to this, and the combustion fuel may be supplied to the combustor 14b from a combustion fuel supply unit.

The power generation system 100 according to Embodiment 2 configured as above also has the same operational advantages as the power generation system 100 according to Illustrative Embodiment 1.

Here, in the power generation system 100 according to Embodiment 2, in a case where the exhaust gas flowing backward from the power generation system 100 is supplied to the combustor 14b, incomplete combustion may occur in the combustor 14b due to the lack of oxygen, and therefore, CO may be generated, or flame-off may occur. Further, in a case where the generated CO flows into the fuel cell 11, the catalyst of the fuel cell 11 may deteriorate, and the power generation efficiency of the fuel cell 11 may decrease.

However, in Illustrative Embodiment 2, when the clogging detector detects the clogging of the discharge passage 70, the controller 102 stops the operation of the power generation system 100, so that the amount of generation of CO decreases. Therefore, in the power generation system 100 according to Illustrative Embodiment 2, the deterioration of the catalyst of the fuel cell 11 can be suppressed, and the decrease in the power generation efficiency of the fuel cell 11 can be suppressed.

### Modification Example 1

Next, Modification Example of the power generation system 100 according to Illustrative Embodiment 2 will be explained.

The power generation system of Modification Example 1 of Illustrative Embodiment 2 is configured such that: the clogging detector is a gas composition detector; and in a case where the clogging detector detects an abnormality of a gas composition, the controller determines that the discharge passage is clogged.

Here, the "abnormality of the gas composition" denotes that the gas detected by the gas composition detector is outside a range of the gas composition to be detected in a normal operation of the power generation system. The range of the gas composition to be detected in the normal operation may be set in advance by an experiment, a simulation, or the like in consideration of the composition of the fuel gas supplied to the fuel cell, required safety standards (standards of the exhaust gas component), and the like at the installation location of the power generation system. Examples of the gas composition detector include/an oxygen concentration detector, a carbon monoxide concentration detector (hereinafter may be referred to as a "CO concentration detector"), and a carbon dioxide concentration detector (hereinafter may be referred to as a "CO₂ concentration detector").

### Configuration of Power Generation System

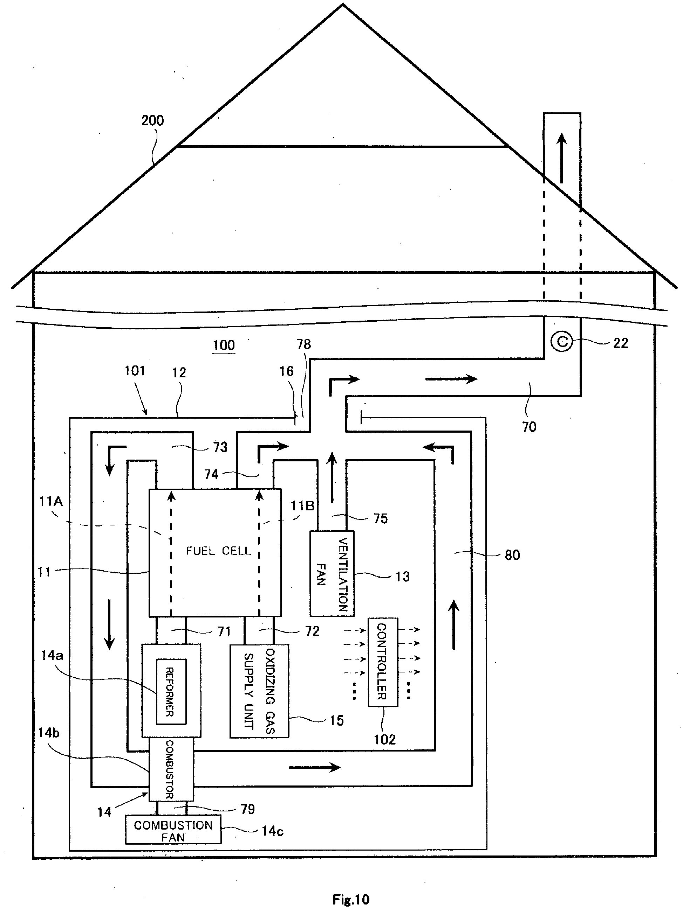

Fig. 10 is a schematic diagram showing a schematic configuration of the power generation system of Modification Example 1 of Illustrative Embodiment 2.

In a case where the discharge passage 70 is clogged, and the exhaust gas from the power generation system 100 flows into the case 12, the composition of the air supplied from the combustion fan 14c to the combustor 14b changes, so that the incomplete combustion may occur in the combustor 14b, and carbon monoxide may be generated. Therefore, in the power generation system 100 of Modification Example 1 of Illustrative Embodiment 2, a CO concentration detector 22 is provided and detects the CO concentration to detect the clogging of the discharge passage 70.

As shown in Fig. 10, the power generation system 100 of Modification Example 1 is the same in basic configuration as the power generation system 100 according to Illustrative Embodiment 2 but is different from the power generation system 100 according to Illustrative Embodiment 2 in that the CO concentration detector 22 is provided instead of the flow rate detector 20. The CO concentration detector 22 may have any configuration as long as it can detect the CO concentration. A device to be used as the concentration detector 22 is not limited. In Modification Example 1, the CO concentration detector 22 is provided in the discharge passage 70. However, the present modification example is not limited to this. The CO concentration detector 22 may be provided in the case 12 or may be configured such that a sensor portion thereof is provided in the discharge passage 70, and the other portion thereof is provided outside the discharge passage 70. Further, the CO concentration detector 22 may be provided at an appropriate position of any one of the off oxidizing gas passage 74, ventilation passage 75, and flue gas passage 80 communicating with the discharge passage 70 or may be provided at an appropriate position of the air intake passage 78.

### Operations of Power Generation System

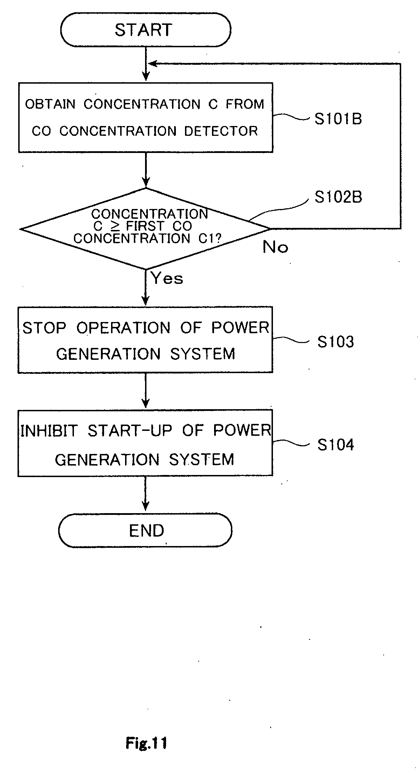

Fig. 11 is a flow chart schematically showing the exhaust gas inflow suppressing operation of the power generation system of Modification Example 1 of Illustrative Embodiment 2.

As shown in Fig. 11, the exhaust gas inflow suppressing operation of the power generation system 100 of Modification Example 1 is basically the same as the exhaust gas inflow suppressing operation of the power generation system 100 according to Illustrative Embodiment 1 but is different from the exhaust gas inflow suppressing operation of the power generation system 100 according to Embodiment 1 in that Steps S101B and S102B are performed instead of Steps S101 and S102 of Illustrative Embodiment 1.

Specifically, the controller 102 obtains a CO concentration C in the discharge passage 70 detected by the CO concentration detector 22 (Step S101B). Next, the controller 102 determines whether or not the concentration C obtained in Step S101B is equal to or higher than a first CO concentration.(first gas concentration) C1 (Step S102B). Here, the first CO concentration C1 may be set as, for example, a range of a concentration of CO generated when the incomplete combustion occurs in the combustor 14b, the concentration being obtained in advance by an experiment or the like. The first CO concentration C1 may be set as, for example, 1,000 ppm.

In a case where the concentration C obtained in Step S101B is lower than the first CO concentration C1 (No in Step S102B), the controller 102 returns to Step S101B and repeats Steps S101B and S102B until the concentration C becomes equal to or higher than the first CO concentration C1. In contrast, in a case where the concentration C obtained in Step S101B is equal to or higher than the first CO concentration C1 (Yes in Step S102B), the controller 102 proceeds to Step S103. The controller 102 stops the operation of the power generation system 100 in Step S 103 and inhibits the start-up of the power generation system 100 (Step S104).

The power generation system 100 of Modification Example 1 configured as above also has the same operational advantages as the power generation system 100 according to Illustrative Embodiment 2.

### Modification Example 2

The power generation system of Modification Example 2 of Illustrative Embodiment 2 of the present invention is configured such that: the clogging detector is an oxygen concentration detector; and in a case where the oxygen concentration detected by the oxygen concentration detector is equal to or lower than a preset first oxygen concentration, the controller determines that the discharge passage is clogged.

### Configuration of Power Generation System

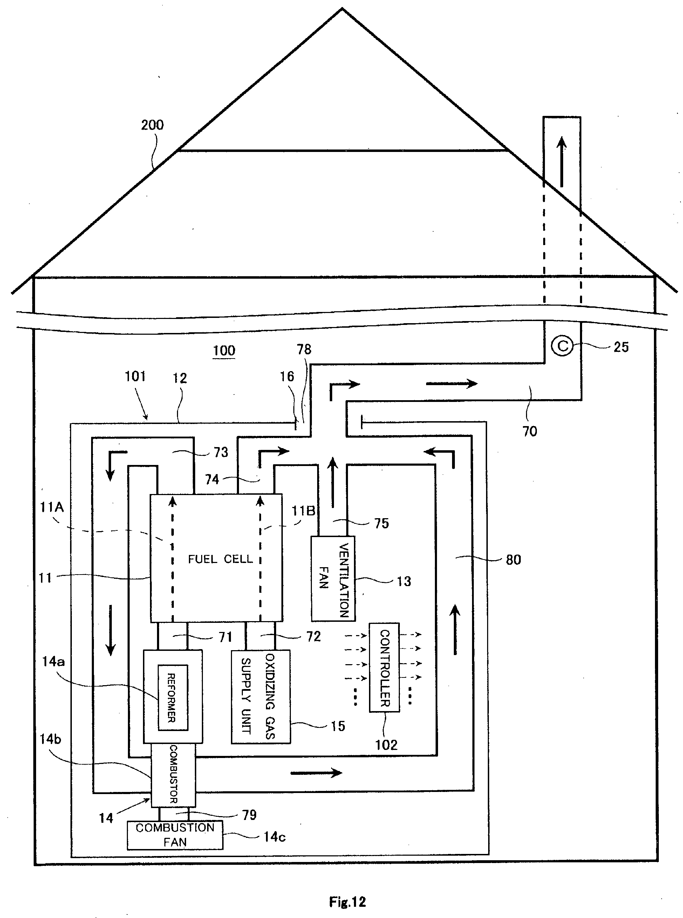

Fig. 12 is a schematic diagram showing a schematic configuration of the fuel cell system of Modification Example 2 of Illustrative Embodiment 2.

As shown in Fig. 12, the power generation system 100 of Modification Example 2 is the same in basic configuration as the power generation system 100 of Modification Example 1 of Illustrative Embodiment 2 but is different from the power generation system 100 of Modification Example 1 of Illustrative Embodiment 2 in that an oxygen concentration detector 25 is provided instead of the CO concentration detector 22. The oxygen concentration detector 25 may have any configuration as long as it can detect the oxygen concentration. A device to be used as the oxygen concentration detector 25 is not limited. In Modification Example 2, the oxygen concentration detector 25 is provided in the discharge passage 70. However, the present modification example is not limited to this. The oxygen concentration detector 25 may be provided in the case 12 or may be configured such that a sensor portion thereof is provided in the discharge passage 70, and the other portion thereof is provided outside the discharge passage 70. Further, the oxygen concentration detector 25 may be provided at an appropriate position of any one of the off oxidizing gas passage 74, ventilation passage 75, and flue gas passage 80 communicating with the discharge passage 70 or may be provided at an appropriate position of the air intake passage 78.

### Operations of Power Generation System

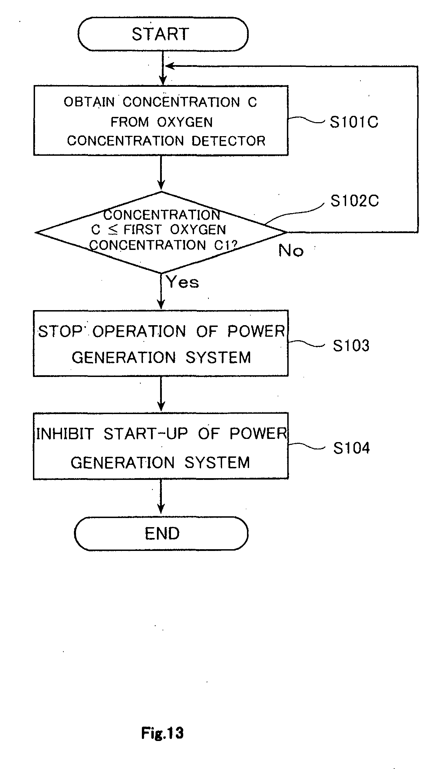

Fig. 13 is a flow chart schematically showing the exhaust gas inflow suppressing operation of the power generation system of Modification Example 2 of Illustrative Embodiment 2.

As shown in Fig. 13, the exhaust gas inflow suppressing operation of the power generation system 100 of Modification Example 2 is basically the same as the exhaust gas inflow suppressing operation of the power generation system 100 according to Illustrative Embodiment 1 but is different from the exhaust gas inflow suppressing operation of the power generation system 100 according to Illustrative Embodiment 1 in that Steps S101C and S102C are performed instead of Steps S101 and S102 of Illustrative Embodiment 1.

Specifically, the controller 102 obtains the oxygen concentration C in the discharge passage 70 detected by the oxygen concentration detector 25 (Step S101C). Next, the controller 102 determines whether or not the concentration C obtained in Step S101C is equal to or lower than the first oxygen concentration C1 (Step S102C). Here, the first oxygen concentration C1 may be set as, for example, a range of an oxygen concentration when the discharge passage 70 is clogged, the oxygen concentration being obtained in advance by an experiment or the like.

The oxygen concentration detected by the oxygen concentration detector 25 when the combustor 14b is not performing combustion (for example, when the power generation system 100 is not operating, but only the ventilation fan 13 is operating) may be stored as a normal oxygen concentration, and the first oxygen concentration C1 may be set as a value obtained by subtracting a predetermined concentration from the normal oxygen concentration. With this, even if the oxygen concentration detected by the oxygen concentration detector 25 and the actual oxygen concentration become different from each other due to a long-term use or the like, misdetection can be suppressed.

The oxygen concentration detected by the oxygen concentration detector 25 when the combustor 14b is not performing combustion (for example, when the power generation system 100 is not operating, but only the ventilation fan 13 is operating) may be stored as a normal oxygen concentration, and the first oxygen concentration C1 may be set as a value obtained by subtracting a predetermined concentration from the normal oxygen concentration. With this, even if the oxygen concentration detected by the oxygen concentration detector 25 and the actual oxygen concentration become different from each other due to a long-term use or the like, misdetection can be suppressed. The predetermined concentration varies depending on the oxygen concentration detection accuracy of the oxygen concentration detector to be used. Therefore, it is preferable that the predetermined concentration be set in accordance with the oxygen concentration detector to be used. Moreover, it is preferable that the predetermined concentration be set such that misdetection does not occur. For example, in a case where the oxygen concentration detector 25 has an accuracy of ±0.5%, the first oxygen concentration C1 may be set as a concentration obtained by subtracting 1% from the oxygen concentration of the atmosphere.

In a case where the concentration C obtained in Step S101C is higher than the first oxygen concentration C1 (No in Step S102C), the controller 102 returns to Step S101C and repeats Steps S101C and S102C until the concentration C becomes equal to or lower than the first oxygen concentration C1. In contrast, in a case where the concentration C obtained in Step S101C is equal to or lower than the first oxygen concentration C1 (Yes in Step S102C), the controller 102 proceeds to Step S103. The controller 102 stops the operation of the power generation system 100 in Step S103 and inhibits the start-up of the power generation system 100 (Step S104).

The power generation system 100 of Modification Example 2 configured as above also has the same operational advantages as the power generation system 100 according to Illustrative Embodiment 2.

### Modification Example 3

The power generation system of Modification Example 3 of Illustrative Embodiment 2 is configured such that: the clogging detector is a carbon dioxide concentration detector; and in a case where the carbon dioxide concentration detected by the carbon dioxide concentration detector is equal to or higher than a preset first carbon dioxide concentration, the controller determines that the discharge passage is clogged.

### Configuration of Power Generation System

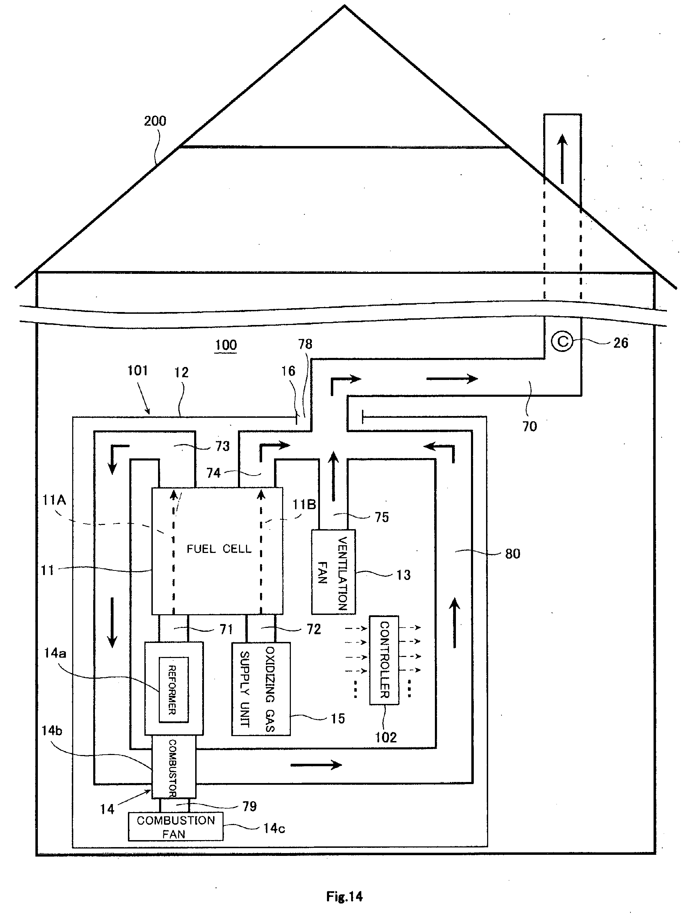

Fig. 14 is a schematic diagram showing a schematic configuration of the fuel cell system of Modification Example 3 of Illustrative Embodiment 2.

As shown in Fig. 14, the power generation system 100 of Modification Example 3 is the same in basic configuration as the power generation system 100 of Modification Example 1 of Illustrative Embodiment 2 but is different from the power generation system 100 of Modification Example 1 of Illustrative Embodiment 2 in that a CO₂ concentration detector 26 is provided instead of the CO concentration detector 22. The CO₂ concentration detector 26 may have any configuration as long as it can detect the CO₂ concentration. A device to be used as the CO₂ concentration detector 26 is not limited. In Modification Example 3, the CO₂ concentration detector 26 is provided in the discharge passage 70. However, the present modification example is not limited to this. The CO₂ concentration detector 26 may be provided in the case 12 or may be configured such that a sensor portion thereof is provided in the discharge passage 70, and the other portion thereof is provided outside the discharge passage 70. Further, the CO₂ concentration detector 26 may be provided at an appropriate position of any one of the off oxidizing gas passage 74, ventilation passage 75, and flue gas passage 80 communicating with the discharge passage 70 or may be provided at an appropriate position of the air intake passage 78.

### Operations of Power Generation System

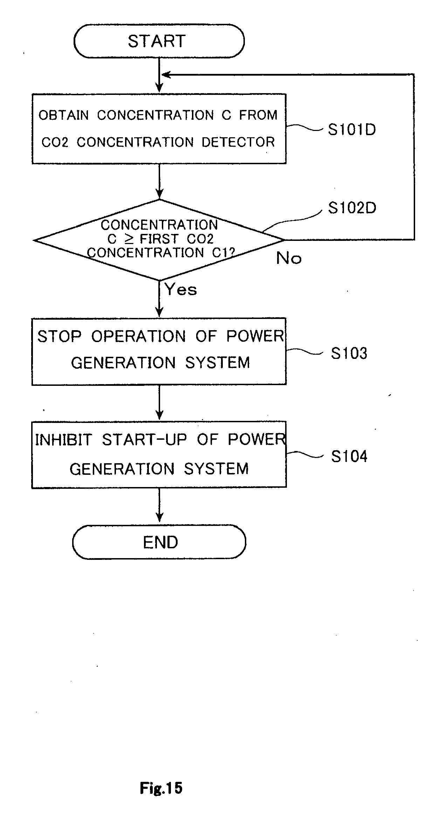

Fig. 15 is a flow chart schematically showing the exhaust gas inflow suppressing operation of the power generation system of Modification Example 3 of Illustrative Embodiment 2.

As shown in Fig. 15, the exhaust gas inflow suppressing operation of the power generation system 100 of Modification Example 3 is basically the same as the exhaust gas inflow suppressing operation of the power generation system 100 according to Illustrative Embodiment 1 but is different from the exhaust gas inflow suppressing operation of the power generation system 100 according to Illustrative Embodiment 1 in that Steps S101D and S102D are performed instead of Steps S101 and S102 of Illustrative Embodiment 1.

Specifically, the controller 102 obtains the CO₂ concentration C in the discharge passage 70 detected by the CO₂ concentration detector 26 (Step S101D). Next, the controller 102 determines whether or not the concentration C obtained in Step S101D is equal to or higher than a first CO₂ concentration (first gas concentration) C1 (Step S102D). Here, the first CO₂ concentration C1 may be set as, for example, a range of the CO₂ concentration when the discharge passage 70 is clogged, the CO₂ concentration being obtained in advance by an experiment or the like.

In a case where the concentration C obtained in Step S101D is lower than the first CO₂ concentration C1 (No in Step S102D), the controller 102 returns to Step S101D and repeats Steps S101D and S102D until the concentration C becomes equal to or higher than the first CO₂ concentration C1. In contrast, in a case where the concentration C obtained in Step S101D is equal to or higher than the first CO₂ concentration C1 (Yes in Step S102D), the controller 102 proceeds to Step S103. The controller 102 stops the operation of the power generation system 100 in Step S103 and inhibits the start-up of the power generation system 100 (Step S104).

The power generation system 100 of Modification Example 3 configured as above also has the same operational advantages as the power generation system 100 according to Illustrative Embodiment 2.

In the power generation systems 100 of Modification Examples 1 to 3, the clogging detector is constituted by the gas composition detector (the CO concentration detector 22, the oxygen concentration detector 25, or the CO₂ concentration detector 26). However, these modification examples are not limited to this. The clogging detector may be constituted by, for example, a pressure detector or may be constituted by a below-described temperature detector.

### Embodiment 3

The power generation system according to Embodiment 3 of the present invention includes a combustion device provided outside the case, and the discharge passage branches to have at least two upstream ends respectively coupled to the combustion device and the fuel cell system.

### Configuration of Power Generation System

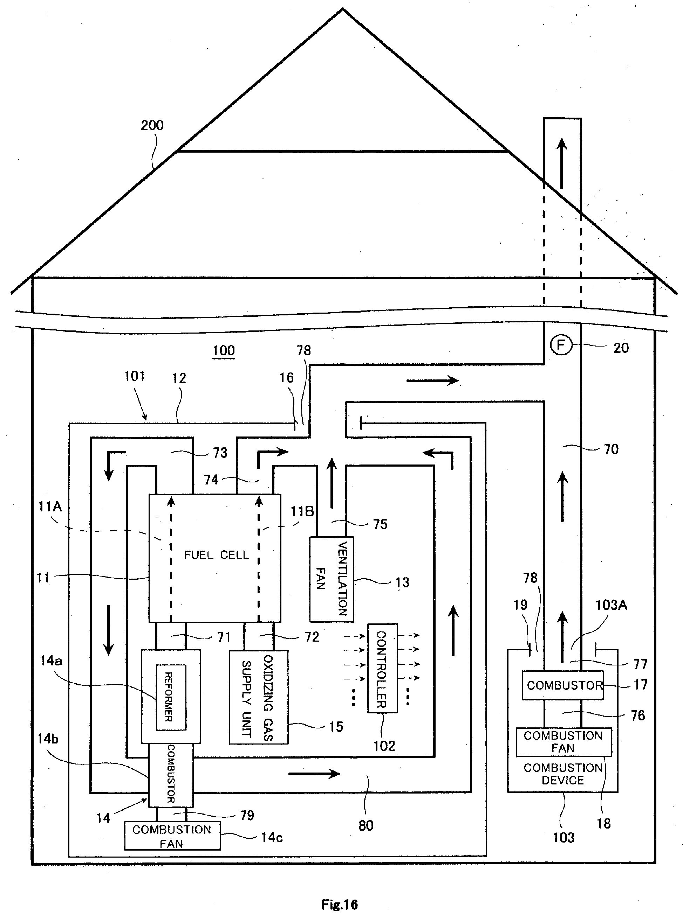

Fig. 16 is a schematic diagram showing a schematic configuration of the power generation system according to Embodiment 3 of the present invention.

As shown in Fig. 16, the power generation system 100 according to Embodiment 3 of the present invention is the same in basic configuration as the power generation system 100 according to Embodiment 2 but is different from the power generation system 100 according to Embodiment 2 in that: a combustion device 103 provided outside the case 12 is further included; and the case 12 and an exhaust port 103A are connected to each other through the discharge passage 70.

Specifically, the combustion device 103 includes a combustor 17 and a combustion fan (combustion air supply unit) 18. The combustor 17 and the combustion fan 18 are connected to each other through a combustion air supply passage 76. The combustion fan 18 may have any configuration as long as it can supply combustion air to the combustor 17. For example, the combustion fan 18 may be constituted by a fan, a blower, or the like.

The combustion fuel, such as a combustible gas (a natural gas or the like) or a liquid fuel (kerosene or the like), is supplied to the combustor 17 from a combustion fuel supply unit, not shown. Then, the combustor 17 combusts the combustion air supplied from the combustion fan 18 and the combustion fuel supplied from the combustion fuel supply unit to generate heat and a flue gas. The generated heat can be used to heat water. To be specific, the combustion device 103 may be used as a boiler.

An upstream end of the exhaust gas passage 77 is connected to the combustor 17, and a downstream end thereof is connected to the discharge passage 70. With this, the flue gas generated by the combustor 17 is discharged through the exhaust gas passage 77 to the discharge passage 70. To be specific, the flue gas generated by the combustor 17 is discharged to the discharge passage 70 as the exhaust gas discharged from the combustion device 103. Then, the flue gas discharged to the discharge passage 70 flows through the discharge passage 70 to be discharged to the outside of the building 200.

A hole 19 is formed at an appropriate position of a wall constituting the combustion device 103 so as to penetrate the wall in a thickness direction of the wall, and the pipe constituting the discharge passage 70 is inserted through the hole 19 such that a gap is formed between the hole 19 and the discharge passage 70. The gap between the hole 19 and the discharge passage 70 constitutes an air supply port 19 (air intake passage 78). With this, the air outside the power generation system 100 is supplied through the air supply port 19 into the combustion device 103.

To be specific, the discharge passage 70 branches to have two upstream ends respectively connected to the hole 16 and the hole 19. The discharge passage 70 is formed so as to extend to the outside of the building 200, and a downstream end (opening) thereof is open to the atmosphere. With this, the discharge passage 70 causes the case 12 and the exhaust port 103A of the combustion device 103 to communicate with each other.

In Embodiment 3, the hole through which the pipe constituting the discharge passage 70 is inserted and the hole constituting the air supply port 19 are constituted by one hole 19. However, the present embodiment is not limited to this. The hole through which the pipe constituting the discharge passage 70 is inserted (the hole to which the pipe constituting the discharge passage 70 is connected) and the hole constituting the air supply port 19 may be separately formed on the combustion device 103. The air supply port 19 may be constituted by one hole formed on the combustion device 103 or may be constituted by a plurality of holes. Further, the air intake passage 78 may be configured by inserting a pipe through the air supply port 19.

### Operations of Power Generation System

The following will explain the operations of the power generation system 100 according to Embodiment 3 in a case where the clogging detector detects the clogging of the discharge passage 70 when the combustion device 103 is operating. In a case where the combustion device 103 is not operating, but the fuel cell system 101 is operating, the exhaust gas inflow suppressing operation of the power generation system 100 is executed as with Embodiment 1.

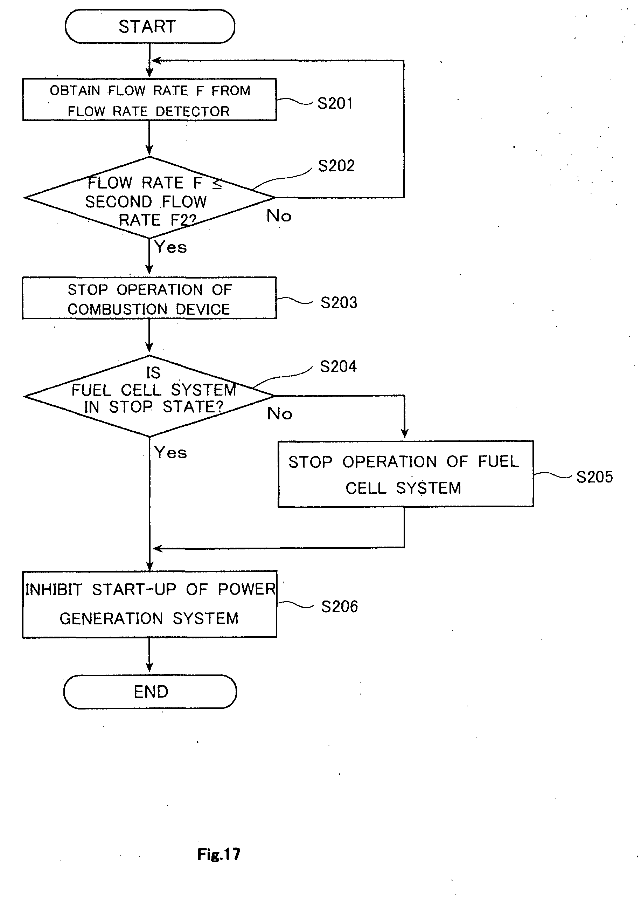

Fig. 17 is a flow chart schematically showing the exhaust gas inflow suppressing operation of the power generation system according to Embodiment 3.

As shown in Fig. 17, while the combustion device 103 is operating, the controller 102 obtains a flow rate F of the gas in the discharge passage 70 detected by the flow rate detector 20 (Step S201). Here, "while the combustion device 103 is operating" denotes a period in which the exhaust gas is being discharged from the combustion device 103 to the discharge passage 70. In Embodiment 3, "while the combustion device 103 is operating" denotes a period in which at least the combustor 17 or the combustion fan 18 is operating. Therefore, a case where the combustor 17 is not operating but only the combustion fan 18 is operating also corresponds to "while the combustion device 103 is operating".

Next, the controller 102 determines whether or not the flow rate F obtained in Step S201 is equal to or lower than a preset second flow rate F2 (Step S202). Here, the second flow rate F2 may be set as, for example, a range of the flow rate of the exhaust gas when the exhaust gas discharged from the combustion device 103 flows through the discharge passage 70, the range being obtained in advance by an experiment or the like.

In a case where the flow rate F obtained in Step S201 is higher than the second flow rate F2 (No in Step S202), the controller 102 returns to Step S201 and repeats Steps S201 and S202 until the flow rate F becomes equal to or lower than the second flow rate F2. In contrast, in a case where the flow rate F obtained in Step S201 is equal to or lower than the second flow rate F2 (Yes in Step S202), the controller 102 determines that the discharge passage 70 is clogged, and proceeds to Step S203.

In Step S203, the controller 102 stops the operation of the combustion device 103. With this, the discharge of the exhaust gas from the combustion device 103 to the discharge passage 70 is stopped, and the backward flow of the exhaust gas from the discharge passage 70 into the case 12 is suppressed.

Next, the controller 102 confirms whether or not the fuel cell system 101 is in a stop state (Step S204). In a case where the fuel cell system 101 is operating (No in Step S204), the controller 102 stops the operation of the fuel cell system 101 (Step S205) and proceeds to Step S206. This is because if the fuel cell system 101 is operating, the exhaust gas discharged from the fuel cell system 101 flows backward into the case 12. In contrast, in a case where the fuel cell system 101 is in a stop state (Yes in Step S204), the controller 102 proceeds to Step S206.

In Step S206, the controller 102 inhibits the start-up of the power generation system 100. Specifically, for example, the controller 102 inhibits the start-up of the power generation system 100 by not allowing a start-up operation of the power generation system 100 even in a case where a user of the power generation system 100 causes a remote controller, not shown, to transmit a start-up request signal to the controller 102 or even in a case where a start-up time of the power generation system 100 has come. Since the start-up of the power generation system 100 is inhibited, the start-up of the combustion device 103 is also inhibited.

As above, in the power generation system 100 according to Embodiment 3, when the clogging detector detects the clogging of the discharge passage 70, the controller 102 inhibits the operation of the power generation system 100, so that the backward flow of the exhaust gas into the case 12 is suppressed. On this account, the retention of the high-temperature exhaust gas in the case 12 is suppressed, and therefore, the temperature increase inside the case 12 is suppressed. Thus, the decreases in efficiencies of the auxiliary devices (the controller 102 and the like) contained in the case 12 can be suppressed, and the durability of the power generation system 100 can be improved.

Here, in a case where a desulfurizer configured to desulfurize a sulfur compound contained in a natural gas or the like is not provided in the combustion device 103, SOₓ is generated by a combustion operation of the combustion device 103. Then, if the generated SOₓ flows backward through the discharge passage 70 into the case 12 to be supplied to the cathode of the fuel cell 11, the poisoning of the catalyst contained in the cathode may be accelerated.

In addition, in a case where the exhaust gas flowing backward from the combustion device 103 is supplied to the combustor 14b, the incomplete combustion may occur in the combustor 14b, and therefore, CO may be generated. Further, in a case where the generated CO flows into the fuel cell 11, the catalyst of the fuel cell 11 may deteriorate, and the power generation efficiency of the fuel cell 11 may decrease.

However, in the power generation system 100 according to Embodiment 3, as described above, the controller 102 inhibits the operation of the power generation system 100. Therefore, the backward flow of the exhaust gas (containing CO and SOₓ) from the combustion device 103 into the case 12 can be suppressed, so that the supply of the CO and SOₓ to the fuel cell 11 can be suppressed.

Therefore, in the power generation system 100 according to Embodiment 3, the poisoning of the cathode of the fuel cell 11 can be suppressed, the decrease in the power generation efficiency of the fuel cell 11 can be suppressed, and the durability of the power generation system 100 can be improved.

In Embodiment 3, as described above, the controller 102 separately performs the stop of the combustion device 103 and the stop of the fuel cell system 101. However, the present embodiment is not limited to this. As with Embodiments 1 and 2 (and Modification Examples of Embodiments 1 and 2), the controller 102 may perform the stop of the combustion device 103 and the stop of the fuel cell system 101 at once as the stop of the power generation system 100.

### Modification Example 1

Next, the power generation system of Modification Example 1 of Embodiment 3 will be explained.

The power generation system of Modification Example 1 of Embodiment 3 is configured such that: the clogging detector is a temperature detector; and in a case where the temperature detected by the temperature detector is higher than a preset first temperature or in a case where the temperature detected by the temperature detector is lower than a second temperature lower than the first temperature, the controller determines that the discharge passage is clogged.

### Configuration of Power Generation System

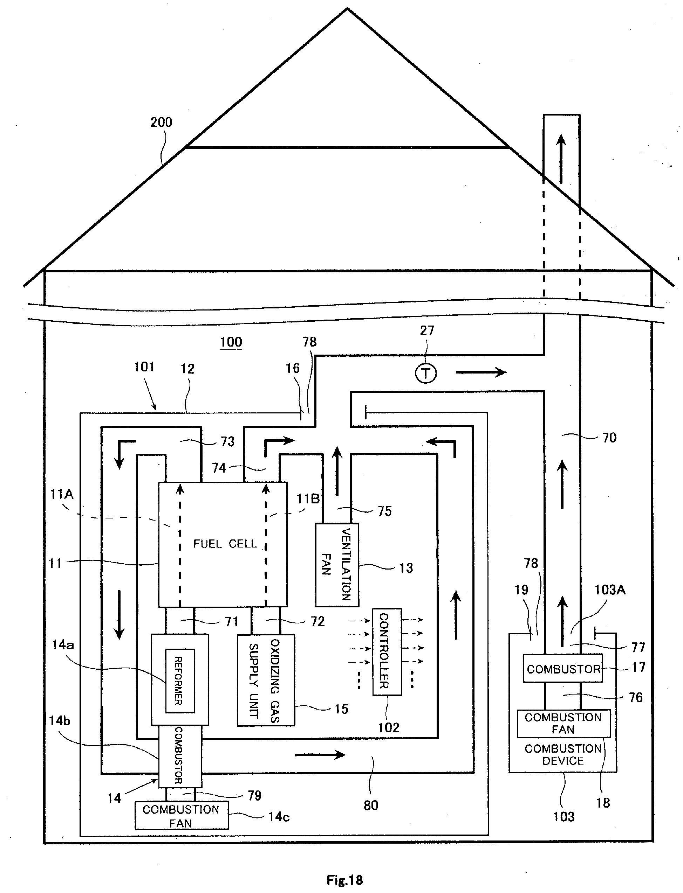

Fig. 18 is a schematic diagram showing a schematic configuration of the power generation system of Modification Example 1 of Embodiment 3.

As shown in Fig. 18, the power generation system 100 of Modification Example 1 of Embodiment 3 is the same in basic configuration as the power generation system 100 according to Embodiment 3 but is different from the power generation system 100 according to Embodiment 3 in that a temperature detector 27 is provided instead of the flow rate detector 20. The temperature detector 27 may have any configuration as long as it can detect the temperature in the discharge passage 70. A device to be used as the temperature detector 27 is not limited. In order to detect the clogging of the discharge passage 70, it is preferable that the temperature detector 27 be provided at a portion of the discharge passage 70, the portion being located upstream of a branch point where the discharge passage 70 branches toward the combustion device 103.

In Modification Example 1, the temperature detector 27 is provided in the discharge passage 70. However, the present modification example is not limited to this. The temperature detector 27 may be provided in the case 12 or may be configured such that a sensor portion thereof is provided in the discharge passage 70, and the other portion thereof is provided outside the discharge passage 70. Further, the temperature detector 27 may be provided at an appropriate position of any one of the off oxidizing gas passage 74, ventilation passage 75, and flue gas passage 80 communicating with the discharge passage 70 or may be provided at an appropriate position of the air intake passage 78.

### Operations of Power Generation System

The following will explain the operations of the power generation system 100 of Modification Example 1 of Embodiment 3 in a case where the clogging detector detects the clogging of the discharge passage 70 when the combustion device 103 is operating.

As shown in Fig. 18, in a case where the discharge passage 70 clogs at a portion located downstream of a portion where the temperature detector 27 is provided, the temperature detected by the temperature detector 27 after the clogging of the discharge passage 70 becomes higher than the temperature detected by the temperature detector 27 before the clogging of the discharge passage 70. Therefore, in a case where the temperature detected by the temperature detector 27 is higher than the first temperature that is a highest value in a temperature range in the discharge passage 70 when the power generation system 100 is operating and the discharge passage 70 is not clogged, the controller 102 can determine that the discharge passage 70 is clogged.

In a case where the discharge passage 70 clogs at a portion located upstream of the portion where the temperature detector 27 is provided, the temperature detected by the temperature detector 27 after the clogging of the discharge passage 70 may become lower than the temperature detected by the temperature detector 27 before the clogging of the discharge passage 70. For example, if the discharge passage 70 clogs in a case where the temperature detector 27 is provided near the downstream end of the discharge passage 70, and outside air temperature is low, the temperature detected by the temperature detector 27 may become low by the heat exchange between the outside air and the exhaust gas existing at a downstream side of the clogged portion of the discharge passage 70.

Therefore, in a case where the temperature detected by the temperature detector 27 is lower than the second temperature that is a lowest value in the temperature range in the discharge passage 70 when the power generation system 100 is operating, and the discharge passage 70 is not clogged, the controller 102 can determine that the discharge passage 70 is clogged.

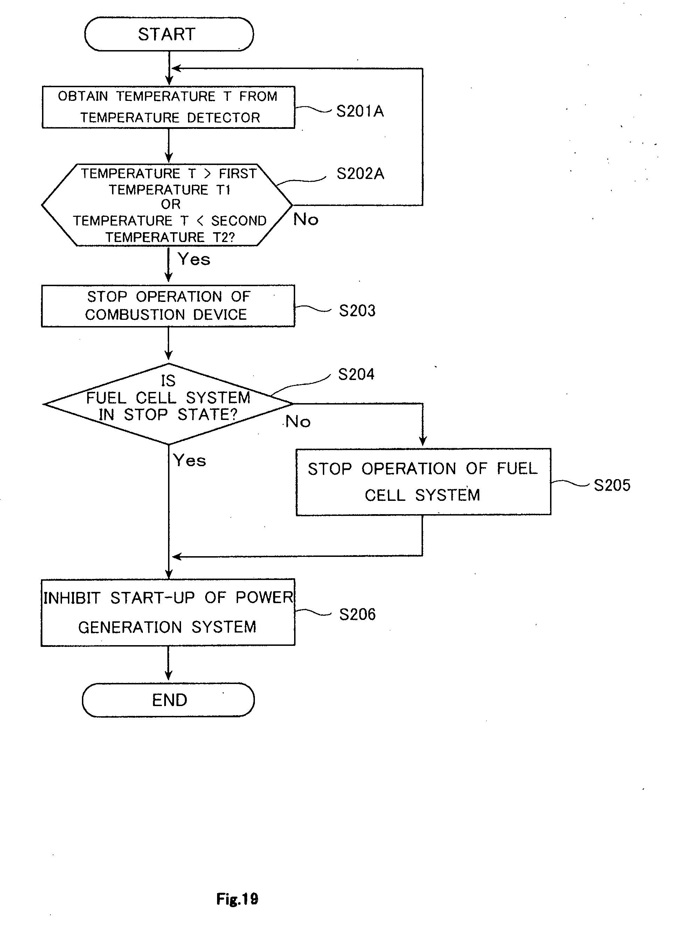

To be specific, in a case where the temperature detected by the temperature detector 27 is outside a predetermined temperature range, the controller 102 can determine that the discharge passage 70 is clogged. Hereinafter, the exhaust gas inflow suppressing operation of the power generation system 100 by the controller 102 based on the temperature detected by the temperature detector 27 will be explained in reference to Fig. 19.

Fig. 19 is a flow chart schematically showing the exhaust gas inflow suppressing operation of the power generation system of Modification Example 1 of Embodiment 3.

As shown in Fig. 19, the exhaust gas inflow suppressing operation of the power generation system 100 of Modification Example 1 is basically the same as the exhaust gas inflow suppressing operation of the power generation system 100 according to Embodiment 3 but is different from the exhaust gas inflow suppressing operation of the power generation system 100 according to Embodiment 3 in that Steps S201A and S202A are performed instead of Steps S201 and S202 of Embodiment 3.

Specifically, while the combustion device 103 is operating, the controller 102 obtains a temperature T in the discharge passage 70 detected by the temperature detector 27 (Step S201A). Next, the controller 102 determines whether or not the temperature T obtained in Step S201A is higher than a first temperature T1 or whether or not the temperature T obtained in Step S201A is lower than a second temperature T2 (Step S202A).

Here, the first temperature T1 may be set as, for example, a highest temperature value in a temperature range in the discharge passage 70 when the discharge passage 70 is clogged, the temperature range being obtained in advance by an experiment or the like. Moreover, a highest temperature among the temperatures detected by the temperature detector 27 when the combustor 14b is performing combustion (for example, when the power generation system 100 is generating electric power) may be stored, and the first temperature T1 may be set as a value obtained by adding a predetermined temperature to the highest temperature. The predetermined temperature may be set arbitrarily such that misdetection does not occur.

The second temperature T2 may be set as, for example, a lowest temperature value in a temperature range in the discharge passage 70 when the discharge passage 70 is clogged, the temperature range being obtained in advance by an experiment or the like. Moreover, a lowest temperature among the temperatures detected by the temperature detector 27 when the combustor 14b is performing combustion (for example, when the power generation system 100 is generating electric power) may be stored, and the second temperature T2 may be set as a value obtained by subtracting a predetermined temperature from the lowest temperature. The predetermined temperature may be set arbitrarily such that misdetection does not occur.

In a case where the temperature T obtained in Step S201A is equal to or higher than the second temperature T2 and equal to or lower than the first temperature T1 (No in Step S202A), the controller 102 returns to Step S201A and repeats Steps S201A and S202A until the temperature T becomes higher than the first temperature T1 or until the temperature T becomes lower than the second temperature T2. In contrast, in a case where the temperature T obtained in Step S201A is higher than the first temperature T1 or in a case where the temperature T obtained in Step S201 A is lower than the second temperature T2 (Yes in Step S202A), the controller 102 determines that the discharge passage 70 is clogged, and proceeds to Step S203. Operations in Step S203 and subsequent steps are the same as those of the power generation system 100 according to

### Embodiment 3.

The power generation system 100 of Modification Example 1 configured as above also has the same operational advantages as the power generation system 100 according to Embodiment 3. Modification Example 1 has explained a case where the combustion device 103 is operating. However, even in a case where the combustion device 103 is in a stop state, and the fuel cell system 101 is operating, the exhaust gas inflow suppressing operation of the power generation system 100 is executed as with a case where the combustion device 103 is operating.

### Modification Example 2

The power generation system of Modification Example 2 of Embodiment 3 is configured such that: the clogging detector is a temperature detector; and in a case where a temperature difference between the temperature detected by the temperature detector before a predetermined time and the temperature detected by the temperature detector after the predetermined time is equal to or larger than a preset first temperature difference or in a case where the temperature difference is equal to or smaller than a second temperature difference smaller than the first temperature difference, the controller determines that the discharge passage is clogged.

Since the power generation system 100 of Modification Example 2 of Embodiment 3 is similar in configuration to the power generation system 100 of Modification Example 1 of Embodiment 3, a detailed explanation of the configuration thereof is omitted.

### Operations of Power Generation System

The following will explain the operations of the power generation system 100 of Modification Example 2 of Embodiment 3 in a case where the clogging detector detects the clogging of the discharge passage 70 when the combustion device 103 is operating.

In Fig. 18, in a case where the discharge passage 70 clogs at a portion located upstream of the portion where the temperature detector 27 is provided, the temperature difference between the temperature detected by the temperature detector 27 before the clogging of the discharge passage 70 and the temperature detected by the temperature detector 27 after the clogging of the discharge passage 70 may become small. For example, if the discharge passage 70 clogs in a case where the temperature detector 27 is provided near the downstream end of the discharge passage 70, and the outside air temperature is low, the temperature difference between the temperatures detected by the temperature detector 27 may become small by the heat exchange between the outside air and the exhaust gas existing at a downstream side of the clogged portion of the discharge passage 70.

Therefore, in a case where the temperature difference between the temperature detected by the temperature detector 27 before the predetermined time and the temperature detected by the temperature detector 27 after the predetermined time is equal to or smaller than the preset first temperature difference, the controller 102 can determine that the discharge passage 70 is clogged.

In a case where the discharge passage 70 clogs at a portion located downstream of the portion where the temperature detector 27 is provided, the temperature difference between the temperature detected by the temperature detector 27 before the clogging of the discharge passage 70 and the temperature detected by the temperature detector 27 after the clogging of the discharge passage 70 becomes large. Therefore, in a case where the temperature difference between the temperature detected by the temperature detector 27 before the predetermined time and the temperature detected by the temperature detector 27 after the predetermined time is equal to or larger than the second temperature difference larger than the first temperature difference, the controller 102 can determine that the discharge passage 70 is clogged.

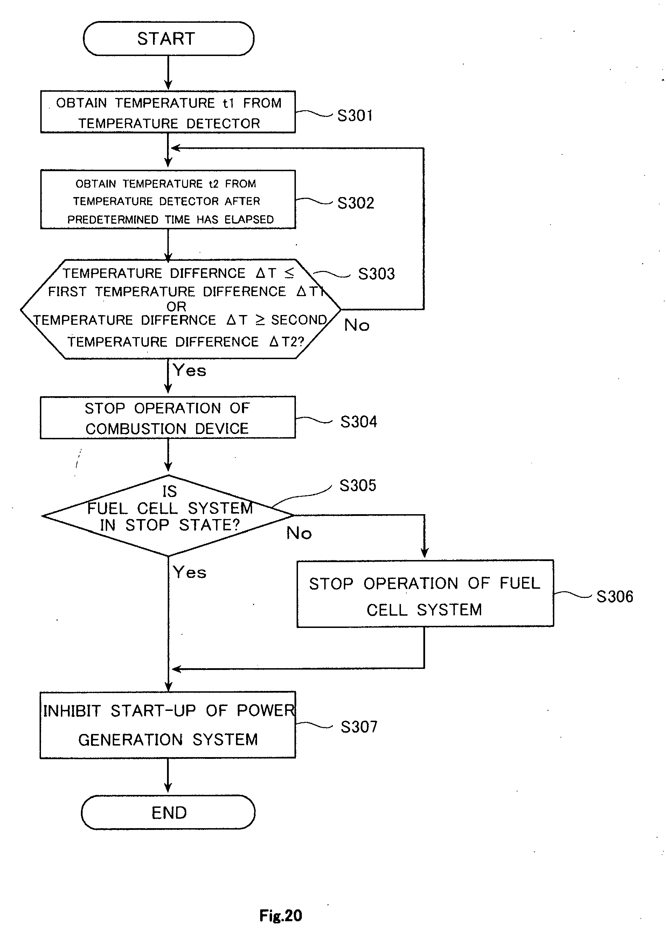

To be specific, in a case where the temperature difference between the temperatures detected by the temperature detector 27 is outside a predetermined temperature difference range, the controller 102 can determine that the discharge passage 70 is clogged. Hereinafter, the exhaust gas inflow suppressing operation of the power generation system 100 by the controller 102 based on the temperature difference between the temperatures detected by the temperature detector 27 will be explained in reference to Fig. 20.

Fig. 20 is a flow chart schematically showing the exhaust gas inflow suppressing operation of the power generation system of Modification Example 2 of Embodiment 3.

As shown in Fig. 20, while the combustion device 103 is operating, the controller 102 obtains a temperature t1 in the discharge passage 70 detected by the temperature detector 27 (Step S301). Next, after a predetermined time has elapsed, the controller 102 again obtains a temperature t2 in the discharge passage 70 from the temperature detector 27 (Step S302). Here, the predetermined time may be set arbitrarily, and for example, several seconds, several tens of seconds, or several minutes.

Next, the controller 102 determines whether or not a temperature difference ΔT between the temperature t1 obtained in Step S301 and the temperature t2 obtained in Step S302 is equal to or lower than a preset first temperature difference ΔT1 or whether or not the temperature difference ΔT is equal to or higher than a second temperature difference ΔT2 (Step S303).

Here, the first temperature difference ΔT1 may be set as, for example, a lowest value in a range of the temperature difference between the temperature when the discharge passage 70 is not clogged and the temperature when the discharge passage 70 is clogged, the range being obtained in advance by an experiment or the like. Similarly, the second temperature difference ΔT2 may be set as, for example, a highest value in the range of the temperature difference between the temperature when the discharge passage 70 is not clogged and the temperature when the discharge passage 70 is clogged, the range being obtained in advance by an experiment or the like.

In a case where the temperature difference ΔT is larger than the first temperature difference ΔT1 and smaller than the second temperature difference ΔT2 (No in Step S303), the controller 102 returns to Step S301 and repeats Steps S301 to S303 until the temperature difference ΔT becomes equal to or smaller than the first temperature difference ΔT1 or until the temperature difference ΔT becomes equal to or larger than the second temperature difference ΔT2. In contrast, in a case where the temperature difference ΔT is equal to or smaller than the first temperature difference ΔT1 or in a case where the temperature difference ΔT is equal to or larger than the second temperature difference ΔT2 (Yes in Step S303), the controller 102 determines that the discharge passage 70 is clogged, and proceeds to Step S304.

In Step S304, the controller 102 stops the operation of the combustion device 103. With this, the discharge of the exhaust gas from the combustion device 103 to the discharge passage 70 stops, and the backward flow of the exhaust gas from the discharge passage 70 into the case 12 is suppressed.

Next, the controller 102 confirms whether or not the fuel cell system 101 is in a stop state (Step S305). In a case where the fuel cell system 101 is operating (No in Step S305), the controller 102 stops the operation of the fuel cell system 101 (Step S306) and proceeds to Step S307. This is because if the fuel cell system 101 is operating, the exhaust gas discharged from the fuel cell system 101 flows backward into the case 12. In contrast, in a case where the fuel cell system 101 is in a stop state (Yes in Step S305), the controller 102 proceeds to Step S307.

In Step S307, the controller 102 inhibits the start-up of the power generation system 100. Specifically, for example, the controller 102 inhibits the start-up of the power generation system 100 by not allowing a start-up operation of the power generation system 100 even in a case where a user of the power generation system 100 causes a remote controller, not shown, to transmit a start-up request signal to the controller 102 or even in a case where a start-up time of the power generation system 100 has come. Since the start-up of the power generation system 100 is inhibited, the start-up of the combustion device 103 is also inhibited.

The power generation system 100 of Modification Example 2 configured as above also has the same operational advantages as the power generation system 100 according to Embodiment 3.

Modification Example 2 has explained a case where the combustion device 103 is operating. However, even in a case where the combustion device 103 is in a stop state, and the fuel cell system 101 is operating, the exhaust gas inflow suppressing operation of the power generation system 100 is executed as with a case where the combustion device 103 is operating.

### Modification Example 3

Next, the power generation system of Modification Example 3 of Embodiment 3 will be explained.

The power generation system of Modification Example 3 of Embodiment 3 is configured such that: the air intake passage branches to have two upstream ends respectively coupled to the combustion device and the fuel cell system; and the air intake passage is provided so as to be able to exchange heat with the discharge passage.

Here, although the air intake passage is provided so as to be able to exchange heat with the discharge passage, the air intake passage and the discharge passage do not have to contact each other, and the air intake passage and the discharge passage may be spaced apart from each other such that the gas in the air intake passage and the gas in the discharge passage can exchange heat with each other. Therefore, the air intake passage and the discharge passage may be provided with a space therebetween. Or, one of these passages may be provided inside the other passage. To be specific, the pipe constituting the air intake passage and the pipe constituting the discharge passage may be formed as a double pipe.

### Configuration of Power Generation System

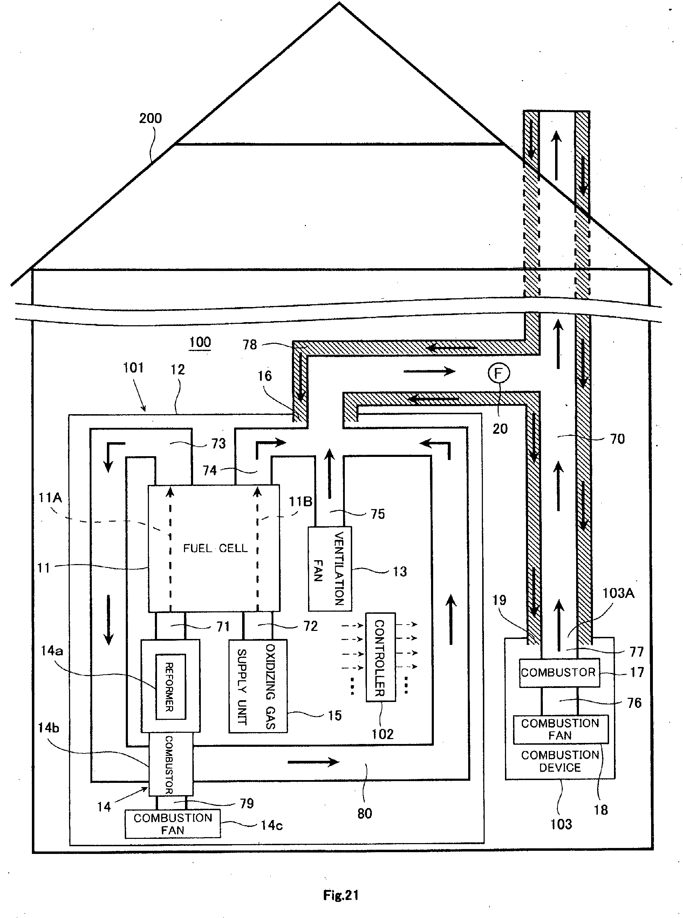

Fig. 21 is a schematic diagram showing a schematic configuration of the power generation system of Modification Example 3 of Embodiment 3. In Fig. 21, the air intake passage is shown by hatching.

As shown in Fig. 21, the power generation system 100 of Modification Example 3 is the same in basic configuration as the power generation system 100 according to Embodiment 3 but is different from the power generation system 100 according to Embodiment 3 regarding the configuration of the air intake passage 78.

Specifically, the air intake passage 78 is provided so as to cause the combustion device 103 and the fuel cell system 101 to communicate with the case 12, supply air to the combustion device 103 and the fuel cell system 101 from outside (herein, outside of the building 200), and surround an outer periphery of the discharge passage 70.

More specifically, the air intake passage 78 branches at a portion to have two downstream ends respectively connected to the hole 16 and the hole 19. The air intake passage 78 is formed so as to extend to the outside of the building 200, and an upstream end (opening) thereof is open to the atmosphere. With this, the air intake passage 78 can cause the case 12 and the combustion device 103 to communicate with each other and supply air to the fuel cell system 101 and the combustion device 103 from the outside of the power generation system 100.

The air intake passage 78 and the discharge passage 70 are configured as a so-called double pipe. With this, when the flue gas (exhaust gas) is discharged from the combustion device 103 to the discharge passage 70, the gas in the air intake passage 78 is heated by heat transfer from the flue gas.

The power generation system 100 of Modification Example 3 configured as above also has the same operational advantages as the power generation system 100 according to Embodiment 3.

In Modification Example 3, the discharge passage 70 and the air intake passage 78 are formed as a double pipe. However, the present modification example is not limited to this. The air intake passage 78 and the discharge passage 70 may have any configuration as long as they are provided so as to be able to exchange heat with each other. For example, the air intake passage 78 and the discharge passage 70 may be configured such that: a wall is provided in an inner space of one pipe so as to extend in a direction in which the pipe extends and divide the inner space of the pipe; one of divided spaces in the pipe serves as the air intake passage 78; and the other space serves as the discharge passage 70.

In Embodiments 1 to 3 (and Modification Examples of Embodiments 1 to 3), the ventilation fan 13 is used as a ventilator. However, the present embodiments (and modification examples) are not limited to this. For example, the oxidizing gas supply unit 15 may be used instead of the ventilation fan 13. In a case where the fuel gas supply unit 14 is constituted by a hydrogen generator, and the hydrogen generator includes the combustor 14b and the combustion fan 14c, the combustion fan 14c may be used as the ventilator instead of the ventilation fan 13.

Further, as the ventilator, the ventilation fan 13 and the oxidizing gas supply unit 15 may be used at the same time, the ventilation fan 13 and the combustion fan 14c may be used at the same time, the combustion fan 14c and the oxidizing gas supply unit 15 may be used at the same time, or the ventilation fan 13, the combustion fan 14c, and the oxidizing gas supply unit 15 may be used at the same time.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art.

### Industrial Applicability

According to the power generation system of the present invention and the method of operating the power generation system, in a case where the discharge passage is clogged, the temperature increase inside the case can be suppressed, and therefore, the decreases in efficiencies of the auxiliary devices stored in the case can be suppressed. Therefore, the power generation system of the present invention and the method of operating the power generation system are useful in the field of fuel cells.

### Reference Signs List

- 11: fuel cell
- 11A: fuel gas channel
- 11B: oxidizing gas channel
- 12: case
- 13: ventilation fan
- 14: fuel gas supply unit (hydrogen generator)
- 14a: reformer
- 14b: combustor
- 14c: combustion fan
- 15: oxidizing gas supply unit
- 16: air supply port
- 17: combustor
- 18: combustion fan
- 19: air supply port
- 20: flow rate detector
- 21: pressure detector
- 22: CO concentration detector
- 23: hole
- 24: hole
- 25: oxygen concentration detector
- 26: CO₂ concentration detector
- 27: temperature detector
- 70: discharge passage
- 71: fuel gas supply passage
- 72: oxidizing gas supply passage
- 73: off fuel gas passage
- 74: off oxidizing gas passage
- 75: ventilation passage
- 76: combustion air supply passage
- 77: exhaust gas passage
- 78: air intake passage
- 79: air supply passage
- 80: flue gas passage
- 100: power generation system
- 101: fuel cell system
- 102: controller
- 103: combustion device
- 103A: exhaust port
- 200: building

## Claims

1. A power generation system comprising:
a fuel cell system including a fuel cell (11) configured to generate electric power by using a fuel gas and an oxidizing gas and a case (12) configured to store the fuel cell (11);
a controller (102);
a supply and exhaust mechanism including a discharge passage (70) through which an exhaust gas from the power generation system is discharged to an outside of the case and an air intake passage through which air is supplied to the power generation system;
a clogging detector provided in the supply and exhaust mechanism;
a ventilator configured to ventilate an inside of the case (12) to discharge air from the case to the discharge passage (70); and
a combustion device provided outside the case (12), wherein:
the discharge passage (70) branches to have at least two upstream ends respectively coupled to the combustion device and the fuel cell system; and
**characterized in that**
the controller (102) is configured to stop an operation of the combustion device and inhibit an operation of the fuel cell system when the controller (102) operates the combustion device and detects clogging of the discharge passage (70) based on information from the clogging detector.

2. The power generation system according to claim 1, wherein:
the clogging detector is constituted by a flow rate detector (20); and
in a case where a flow rate detected by the flow rate detector (20) is equal to or lower than a preset first flow rate, the controller (102) determines that the discharge passage (70) is clogged.

3. The power generation system according to claim 1 or 2, wherein:
the clogging detector is constituted by a pressure detector (21); and
in a case where the pressure detector (21) detects pressure higher than preset first pressure or in a case where the pressure detector (21) detects pressure lower than second pressure lower than the first pressure, the controller (102) determines that the discharge passage (70) is clogged.

4. The power generation system according to any one of claims 1 to 3, wherein in a case where a pressure difference between pressure detected by the pressure detector (21) before a predetermined time and pressure detected by the pressure detector (21) after the predetermined time is equal to or smaller than a preset first pressure difference or in a case where the pressure difference is equal to or larger than a second pressure difference larger than the first pressure difference, the controller (102) determines that the discharge passage (70) is clogged.

5. The power generation system according to any one of claims 1 to 4, wherein:
the fuel cell system further includes a hydrogen generator including a reformer (14a) configured to generate a hydrogen-containing fuel gas from a raw material and water and a combustor (14b) configured to heat the reformer (14a);
the clogging detector is constituted by a gas composition detector configured to detect a composition of a gas existing in at least the supply and exhaust mechanism; and
in a case where the gas composition detector detects an abnormality of a gas composition, the controller determines that the discharge passage (70) is clogged.

6. The power generation system according to claim 5, wherein:
the clogging detector is constituted by an oxygen concentration detector (25); and
in a case where an oxygen concentration detected by the oxygen concentration detector (25) is equal to or lower than a preset first oxygen concentration, the controller (102) determines that the discharge passage (70) is clogged.

7. The power generation system according to claim 5 or 6, wherein:
the clogging detector is constituted by a gas concentration detector (22, 26) configured to detect a gas concentration that is at least a carbon monoxide concentration or a carbon dioxide concentration; and
in a case where the gas concentration detected by the gas concentration detector (22, 26) is equal to or higher than a preset first gas concentration, the controller (102) determines that the discharge passage (70) is clogged.

8. The power generation system according to any one of claims 1 to 7, wherein:
the clogging detector is constituted by a temperature detector (27); and
in a case where a temperature detected by the temperature detector (27) is higher than a preset first temperature or in a case where the temperature detected by the temperature detector (27) is lower than a second temperature lower than the first temperature, the controller (102) determines that the discharge passage (70) is clogged.

9. The power generation system according to any one of claims 1 to 7, wherein:
the clogging detector is constituted by a temperature detector (27); and
in a case where a temperature difference between a temperature detected by the temperature detector (27) before a predetermined time and a temperature detected by the temperature detector (27) after the predetermined time is equal to or larger than a preset first temperature difference or in a case where the temperature difference is equal to or smaller than a second temperature difference smaller than the first temperature difference, the controller (102) determines that the discharge passage (70) is clogged.

10. The power generation system according to any one of claims 1 to 9, wherein
the air intake passage branches to have two downstream ends respectively coupled to the combustion device and the fuel cell system.

11. The power generation system according to any one of claims 1 to 10, wherein in a case where the controller (102) operates the fuel cell system and detects the clogging of the discharge passage (70), the controller (102) stops at least the operation of the fuel cell system.

12. The power generation system according to any one of claims 1 to 11, wherein the controller (102) stops an operation of the power generation system and inhibits start-up of the power generation system.

13. The power generation system according to any one of claims 1 to 12, wherein the air intake passage is provided so as to exchange heat with the discharge passage (70).

14. A method of operating a power generation system,
the power generation system comprising:
a fuel cell system including a fuel cell (11) configured to generate electric power by using a fuel gas and an oxidizing gas and a case (12) configured to store the fuel cell (11);
a supply and exhaust mechanism including a discharge passage (70) through which an exhaust gas from the power generation system is discharged to an outside of the case (12) and an air intake passage through which air is supplied to the power generation system;
a clogging detector provided in at least the supply and exhaust mechanism;
a ventilator configured to ventilate an inside of the case (12) to discharge air from the case to the discharge passage (70); and
a combustion device provided outside the case (12), wherein
the discharge passage (70) branches to have at least two upstream ends respectively coupled to the combustion device and the fuel cell system,
**characterized in that** the method comprising:
operating the combustion device and detecting clogging of the discharge passage based on information from the clogging detector; and
stopping an operation of the combustion device and inhibiting an operation of the fuel cell system when the controller detects clogging of the discharge passage (70) based on information from the clogging detector.

## Patentansprüche

1. Stromerzeugungssystem, umfassend:
ein Brennstoffzellensystem, umfassend eine Brennstoffzelle (11), die dazu eingerichtet ist, elektrischen Strom mit Hilfe eines Brennstoffgases oder eines Oxidationsgases zu erzeugen, und ein Gehäuse (12), das dazu eingerichtet ist, die Brennstoffzelle (11) aufzunehmen;
eine Steuereinheit (102);
einen Zuführ- und Abgasmechanismus, der einen Auslassleitungsweg (70), durch den ein Abgas aus dem Stromerzeugungssystem nach außen aus dem Gehäuse abgegeben wird, und einen Lufteinlassleitungsweg umfasst, durch den Luft dem Stromerzeugungssystem zugeführt wird;
einen Verstopfungsdetektor, der in dem Zuführ- und Abgasmechanismus vorgesehen ist;
einen Ventilator, der dazu eingerichtet ist, einen Innenraum des Gehäuses (12) zu belüften, um Luft aus dem Gehäuse zu dem Auslassleitungsweg (70) abzuführen; und
eine Verbrennungsvorrichtung, die außerhalb des Gehäuses (12) vorgesehen ist, wobei:
sich der Auslassleitungsweg (70) verzweigt, um über wenigstens zwei stromaufwärtige Enden zu verfügen, die jeweils mit der Verbrennungsvorrichtung und dem Brennstoffzellensystem verbunden sind; und
**dadurch gekennzeichnet, dass**
die Steuereinheit (102) dazu eingerichtet ist, einen Betrieb der Verbrennungsvorrich-tung zu stoppen und eine Tätigkeit des Brennstoffzellensystems zu verhindern, wenn die Steuereinheit (102) die Verbrennungsvorrichtung betätigt und ein Verstopfen des Auslassleitungsweges (70) auf der Basis von Informationen aus dem Verstopfungssensor erfasst.

2. Stromerzeugungssystem nach Anspruch 1, bei dem:
der Verstopfungsdetektor aus einem Strömungsratendetektor (20) besteht und,
für den Fall, dass eine Strömungsrate, die von dem Strömungsratendetektor (20) erfasst wird, kleiner oder gleich einer voreingestellten ersten Strömungsrate ist, die Steuereinheit (102) bestimmt, dass der Auslassleitungsweg (70) verstopft ist.

3. Stromerzeugungssystem nach Anspruch 1 oder 2, bei dem der Verstopfungsdetektor aus einem Druckdetektor (21) besteht; und,
für den Fall, bei dem der Druckdetektor (21) einen Druck erfasst, der höher ist als der voreingestellte erste Druck, oder für den Fall, dass der Druckdetektor (21) einen Druck erfasst, der geringer ist als der zweite Druck, der geringer ist als der erste Druck, die Steuereinheit (102) bestimmt, dass der Auslassleitungsweg (70) verstopft ist.

4. Stromerzeugungssystem nach einem der Ansprüche 1 bis 3, bei dem für den Fall, dass ein Druckunterschied zwischen einem Druck, der von dem Druckdetektor (21) vor einer vorbestimmten Zeit erfasst wird, und einem Druck, der von dem Druckdetektor (21) nach der vorbestimmten Zeit erfasst wird, kleiner oder gleich einem ersten vorbestimmten Druckunterschied ist, oder für den Fall, dass der Druckunterschied größer oder gleich einem zweiten Druckunterschied ist, der größer ist als der erste Druckunterschied, die Steuereinheit (102) bestimmt, dass der Auslassleitungsweg (70) verstopft ist.

5. Stromerzeugungssystem nach einem der Ansprüche 1 bis 4, bei dem:
das Brennstoffzellensystem weiterhin einen Wasserstoffgenerator, der einen Reformer (14a) beinhaltet, der dazu eingerichtet ist, ein wasserstoffhaltiges Brennstoffgas aus einem Rohmaterial und Wasser zu erzeugen, und einen Verbrenner (14b) umfasst, der dazu eingerichtet ist, den Reformer (14a) zu erwärmen;
der Verstopfungsdetektor aus einem Gaszusammensetzungsdetektor besteht, der dazu eingerichtet ist, eine Zusammensetzung eines Gases zu erfassen, das wenigstens in dem Zuführ- und Abgasmechanismus enthalten ist; und,
für den Fall, dass der Gaszusammensetzungsdetektor eine Abnormität einer Gaszusammensetzung erfasst, die Steuereinheit bestimmt, dass der Auslassleitungsweg (70) verstopft ist.

6. Stromerzeugungssystem nach Anspruch 5, bei dem:
der Verstopfungsdetektor aus einem Sauerstoffkonzentrationsdetektor (25) besteht; und,
für einen Fall, bei dem eine Sauerstoffkonzentration, die von dem Sauerstoffkonzentrationsdetektor (25) erfasst wird, kleiner oder gleich einer voreingestellten ersten Sauerstoffkonzentration ist, die Steuereinheit (102) bestimmt, dass der Auslassleitungsweg (70) verstopft ist.

7. Stromerzeugungssystem nach einem der Ansprüche 5 oder 6, bei dem:
der Verstopfungsdetektor aus einem Gaskonzentrationsdetektor (22, 26) besteht, der dazu eingerichtet ist, eine Gaskonzentration zu erfassen, die wenigstens eine Kohlenmonoxid-Konzentration oder eine Kohlendioxid-Konzentration ist; und,
für den Fall, dass die Gaskonzentration, die von dem Gaskonzentrationsdetektor (22, 26) erfasst wird, größer oder gleich einer voreingestellten ersten Gaskonzentration ist, die Steuereinheit (102) bestimmt, dass der Auslassleitungsweg (70) verstopft ist.

8. Stromerzeugungssystem nach einem der Ansprüche 1 bis 7, bei dem:
der Verstopfungsdetektor aus einem Temperaturdetektor (27) besteht; und,
für den Fall, dass eine Temperatur, die von dem Temperaturdetektor (27) erfasst wird, höher als eine voreingestellte erste Temperatur ist, oder für den Fall, dass die Temperatur, die von dem Temperaturdetektor (27) erfasst wird, geringer als eine zweite Temperatur ist, die geringer als die erste Temperatur ist, die Steuereinheit (102) bestimmt, dass der Auslassleitungsweg (70) verstopft ist.

9. Stromerzeugungssystem nach einem der Ansprüche 1 bis 7, bei dem:
der Verstopfungsdetektor aus einem Temperaturdetektor (27) besteht; und,
für den Fall, dass ein Temperaturunterschied zwischen einer Temperatur, die von dem Temperaturdetektor (27) vor einer bestimmten Zeit erfasst wird, und einer Temperatur, die von dem Temperaturdetektor (27) nach der vorbestimmten Zeit erfasst wird, größer oder gleich einem voreingestellten ersten Temperaturunterschied ist, oder für den Fall, dass der Temperaturunterschied kleiner oder gleich einem zweiten Temperaturunterschied ist, der kleiner als der erste Temperaturunterschied ist, die Steuereinheit (102) bestimmt, dass der Auslassleitungsweg (70) verstopft ist.

10. Stromerzeugungssystem nach einem der Ansprüche 1 bis 9, bei dem:
sich der Einlassdurchgang verzweigt, um zwei stromabwärtige Enden zu haben, die jeweils mit der Verbrennungsvorrichtung und dem Brennstoffzellensystem verbunden sind.

11. Stromerzeugungssystem nach einem der Ansprüche 1 bis 10, bei dem für den Fall, dass die Steuereinheit (102) das Brennstoffzellensystem betätigt und das Verstopfen des Auslassleitungsweges (70) erfasst, die Steuereinheit (102) wenigstens den Betrieb des Brennstoffzellensystems stoppt.

12. Stromerzeugungssystem nach einem der Ansprüche 1 bis 11, bei dem die Steuereinheit (102) einen Betrieb des Stromerzeugungssystems stoppt und das Starten des Stromerzeugungssystems verhindert.

13. Stromerzeugungssystem nach einem der Ansprüche 1 bis 12, bei dem der Lufteinlassleitungsweg derart vorgesehen ist, dass er Wärme mit dem Auslassleitungsweg (70) tauscht.

14. Verfahren für den Betrieb eines Stromerzeugungssystems,
wobei das Stromerzeugungssystem umfasst:
ein Brennstoffzellensystem, umfassend eine Brennstoffzelle (11), die dazu eingerichtet ist, elektrischen Strom mit Hilfe eines Brennstoffgases oder eines Oxidationsgases zu erzeugen, und ein Gehäuse (12), das dazu eingerichtet ist, die Brennstoffzelle (11) aufzunehmen;
einen Zuführ- und Abgasmechanismus, der einen Auslassleitungsweg (70), durch den ein Abgas aus dem Stromerzeugungssystem nach außen aus dem Gehäuse abgegeben wird, und einen Lufteinlassleitungsweg umfasst, durch den Luft dem Stromerzeugungssystem zugeführt wird;
einen Verstopfungsdetektor, der wenigstens in dem Zuführ- und Abgasmechanismus enthalten ist;
einen Ventilator, der dazu eingerichtet ist, einen Innenraum des Gehäuses (12) zu belüften, um Luft aus dem Gehäuse zu dem Auslassleitungsweg (70) abzuführen; und
eine Verbrennungsvorrichtung, die außerhalb des Gehäuses (12) vorgesehen ist, wobei:
sich der Auslassleitungsweg (70) verzweigt, um über wenigstens zwei stromaufwärtige Enden zu verfügen, die jeweils mit der Verbrennungsvorrichtung und dem Brennstoffzellensystem verbunden sind;
**dadurch gekennzeichnet, dass** das Verfahren umfasst:
Betätigen der Verbrennungsvorrichtung und Erfassen eines Verstopfens des Auslassleitungsweges auf der Basis von Informationen aus dem Verstopfungsdetektor; und
Stoppen eines Betriebs der Verbrennungsvorrichtung und Verhindern eines Betriebs des Brennstoffzellensystems, wenn die Steuereinheit ein Verstopfen des Auslassleitungsweges (70) auf der Basis von Informationen aus dem Verstopfungsdetektor erfasst.

## Revendications

1. Système de génération d'énergie, comprenant :
un système de pile à combustible incluant une pile à combustible (11) configurée pour générer de l'énergie électrique en utilisant un gaz combustible et un gaz oxydant, ainsi qu'une enveloppe (12) configurée pour stocker la pile à combustible (11),
un contrôleur (102),
un mécanisme d'alimentation et d'évacuation incluant un passage d'éjection (70) au travers duquel un gaz d'échappement provenant du système de génération d'énergie est éjecté vers l'extérieur de l'enveloppe et un passage d'arrivée d'air au travers duquel de l'air est fourni au système de génération d'énergie,
un détecteur d'engorgement prévu dans le mécanisme d'alimentation et d'évacuation,
un ventilateur configuré pour ventiler l'intérieur de l'enveloppe (12) afin d'évacuer l'air de l'enveloppe vers le passage d'éjection (70), et
un dispositif de combustion prévu à l'extérieur de l'enveloppe (12) dans lequel :
le passage d'éjection (70) se ramifie pour comporter au moins deux extrémités en amont reliées respectivement au dispositif de combustion et au système de pile à combustible, et
**caractérisé en ce que**
le contrôleur (102) est configuré pour arrêter le fonctionnement du dispositif de combustion et inhiber une opération du système de pile à combustible lorsque le contrôleur (102) met en oeuvre le dispositif de combustion et détecte un engorgement du passage d'éjection (70) sur la base d'informations provenant du détecteur d'engorgement.

2. Système de génération d'énergie selon la revendication 1, dans lequel :
le détecteur d'engorgement est constitué d'un détecteur de débit d'écoulement (20), et
dans le cas où le débit d'écoulement détecté par le détecteur de débit d'écoulement (20) est inférieur ou égal à un premier débit d'écoulement prédéterminé, le contrôleur (102) détermine que le passage d'éjection (70) est obstrué.

3. Système de génération d'énergie selon la revendication 1 ou 2, dans lequel :
le détecteur d'engorgement est constitué d'un détecteur de pression (21), et
dans le cas où le détecteur de pression (21) détecte une pression supérieure à une première pression prédéterminée, ou bien dans le cas où le détecteur de pression (21) détecte une pression inférieure à une seconde pression elle-même inférieure à la première pression, le contrôleur (102) détermine que le passage d'éjection (70) est obstrué.

4. Système de génération d'énergie selon l'une quelconque des revendications 1 à 3, dans lequel : dans le cas où la différence de pression, entre la pression détectée par le détecteur de pression (21) avant un temps prédéterminé et la pression détectée par le détecteur de pression (21) après le temps prédéterminé, est inférieure ou égale à une première différence de pression prédéterminée, ou bien dans le cas où la différence de pression est supérieure ou égale à une seconde différence de pression plus grande que la première différence de pression, le contrôleur (102) détermine que le passage d'éjection (70) est obstrué.

5. Système de génération d'énergie selon l'une quelconque des revendications 1 à 4, dans lequel :
le système de pile à combustible inclut en outre un générateur d'hydrogène comprenant un reformeur (14a) configuré
pour générer un gaz combustible contenant de l'hydrogène à partir d'une matière brute et de l'eau ainsi qu'un dispositif de combustion (14b) configuré pour chauffer le reformeur (14a),
le détecteur d'engorgement est constitué d'un détecteur de composition de gaz configuré pour détecter la composition d'un gaz se trouvant dans au moins le mécanisme d'alimentation et d'évacuation, et
dans le cas où le détecteur de composition de gaz détecte une anomalie dans la composition du gaz, le contrôleur détermine que le passage d'éjection (70) est obstrué.

6. Système de génération d'énergie selon la revendication 5, dans lequel :
le détecteur d'engorgement est constitué d'un détecteur de concentration en oxygène (25), et
dans le cas où la concentration en oxygène détectée par le détecteur de concentration en oxygène (25) est inférieure ou égale à une première concentration en oxygène prédéterminée, le contrôleur (102) détermine que le passage d'éjection (70) est obstrué.

7. Système de génération d'énergie selon la revendication 5 ou 6, dans lequel :
le détecteur d'engorgement est constitué d'un détecteur de concentration en gaz (22, 26) configuré pour détecter la concentration d'un gaz qui est au moins une concentration en monoxyde de carbone ou une concentration en dioxyde de carbone, et
dans le cas où la concentration en gaz détectée par le détecteur de concentration base (22, 26) est supérieure ou égale à une première concentration en gaz prédéterminée, le contrôleur (102) détermine que le passage d'éjection (70) est obstrué.

8. Système de génération d'énergie selon l'une quelconque des revendications 1 à 7, dans lequel :
le détecteur d'engorgement est constitué d'un détecteur de température (27), et
dans le cas où la température détectée par le détecteur de température (27) est supérieure à une première température prédéterminée ou bien dans le cas où la température détectée par le détecteur de température (27) est inférieure à une seconde température elle-même inférieure à la première température, le contrôleur (102) détermine que le passage d'éjection (70) est obstrué.

9. Système de génération d'énergie selon l'une quelconque des revendications 1 à 7, dans lequel :
le détecteur d'engorgement est constitué d'un détecteur de température (27), et
dans le cas où la différence de température entre la température détectée par le détecteur de température (27) avant un temps prédéterminé et la température détectée par le détecteur de température (27) après le temps prédéterminé est supérieure ou égale à une première différence de température prédéterminée ou bien dans le cas où la différence de température est inférieure ou égale à une seconde différence de température plus petite que la première différence de température, le contrôleur (102) détermine que le passage d'éjection (70) est obstrué.

10. Système de génération d'énergie selon l'une quelconque des revendications 1 à 9, dans lequel :
le passage d'admission d'air se ramifie pour présenter deux extrémités en aval respectivement raccordées au dispositif de combustion et au système de pile à combustible.

11. Système de génération d'énergie selon l'une quelconque des revendications 1 à 10, dans lequel, dans le cas où le contrôleur (102) met en oeuvre le système de pile à combustible et détecte l'engorgement du passage d'éjection (110), le contrôleur (102) arrête au moins le fonctionnement du système de pile à combustible.

12. Système de génération d'énergie selon l'une quelconque des revendications 1 à 11, dans lequel le contrôleur (102) arrête le fonctionnement du système de génération d'énergie et inhibe le démarrage du système de génération d'énergie.

13. Système de génération d'énergie selon l'une quelconque des revendications 1 à 12, dans lequel le passage d'admission d'air est prévu de façon à échanger de la chaleur avec le passage d'éjection (70).

14. Procédé permettant de mettre en oeuvre un système de génération d'énergie,
le système de génération d'énergie comprenant :
un système de pile à combustible incluant une pile à combustible (11) configurée pour générer de l'énergie électrique en utilisant un gaz combustible et un gaz oxydant, ainsi qu'une enveloppe (12) configurée pour stocker la pile à combustible (11),
un mécanisme d'alimentation et d'évacuation incluant un passage d'éjection (70) au travers duquel un gaz d'échappement provenant du système de génération d'énergie est éjecté vers l'extérieur de l'enveloppe (12) et un passage d'arrivée d'air au travers duquel de l'air est fourni au système de génération d'énergie,
un détecteur d'engorgement prévu au moins dans le mécanisme d'alimentation et d'évacuation,
un ventilateur configuré pour ventiler l'intérieur de l'enveloppe (12) afin d'évacuer l'air de l'enveloppe vers le passage d'éjection (70), et
un dispositif de combustion prévu à l'extérieur de l'enveloppe (12) dans lequel :
le passage d'éjection (70) se ramifie pour comporter au moins deux extrémités en amont reliées respectivement au dispositif de combustion et au système de pile à combustible, et
**caractérisé en ce que** le procédé comprend :
la mise en oeuvre du dispositif de combustion et la détection de l'engorgement du passage d'éjection sur la base d'informations provenant du détecteur d'engorgement, et
l'arrêt du fonctionnement du dispositif de combustion et l'inhibition d'une opération du système de pile à combustible lorsque le contrôleur détecte l'engorgement du passage d'éjection (70) sur la base d'informations provenant du détecteur d'engorgement.
